(19) Europäisches Patentamt / European Patent Office / Office européen des brevets

(11) **EP 3 261 451 B1**

(12) **EUROPEAN PATENT SPECIFICATION**

(45) Date of publication and mention of the grant of the patent:
**24.04.2024 Bulletin 2024/17**

(21) Application number: **16712982.4**

(22) Date of filing: **22.02.2016**

(51) International Patent Classification (IPC):
**A23C 3/033** *(2006.01)* **A23C 9/142** *(2006.01)*
**A23C 9/152** *(2006.01)*

(52) Cooperative Patent Classification (CPC):
(C-Sets available)
**A23C 9/1516; A23C 3/033; A23C 9/1422;**
**A23C 9/1522;** A23C 2210/208; A23V 2002/00

(Cont.)

(86) International application number:
**PCT/GB2016/050442**

(87) International publication number:
**WO 2016/135464 (01.09.2016 Gazette 2016/35)**

(54) **SUPPLEMENTED MILK PRODUCT AND ITS PRODUCTION PROCESS**

MILCHERZEUGNIS MIT ZUSATZSTOFFEN UND SEIN HERSTELLUNGSVERFAHREN

PRODUIT LAITIER SUPPLÉMENTÉ ET SON PROCÉDÉ DE PRODUCTION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **23.02.2015 GB 201502983**

(43) Date of publication of application:
**03.01.2018 Bulletin 2018/01**

(73) Proprietor: **Arla Foods Limited**
**Leeds LS10 1AB (GB)**

(72) Inventors:
• **BARNARD, Lucy Marianne**
**Leeds LS10 1AB (GB)**
• **WHITHAM, David Henry**
**Leeds LS10 1AB (GB)**
• **MIKKELSEN, Karina**
**Leeds LS10 1AB (GB)**

(74) Representative: **Potter Clarkson**
**Chapel Quarter**
**Mount Street**
**Nottingham NG1 6HQ (GB)**

(56) References cited:
**WO-A1-96/36238** **WO-A2-2010/085957**

• Manuel Olivares ET AL: "Nutrient Requirements and Interactions Milk Inhibits and Ascorbic Acid Favors Ferrous Bis-Glycine Chelate Bioavailability in Humans 1,2", , 1997, XP55283056, Retrieved from the Internet: URL:http://jn.nutrition.org/content/127/7/1407.full.pdf [retrieved on 2016-06-23]
• Dsm Nutritional Products: "Fortification BasicsMilk", , 1 January 1998 (1998-01-01), pages 1-4, XP55722110, Retrieved from the Internet: URL:https://www.dsm.com/content/dam/dsm/nip/en_US/documents/milk.pdf [retrieved on 2020-08-12]
• Lynn S Hinckley ET AL: "THE DAIRY PRACTICES COUNCIL GUIDELINE FOR VITAMIN A & D FORTIFICATION OF FLUID MILK THE DAIRY PRACTICES COUNCIL Bloom, Vice President Terry B. Musson, Executive Vice President EXCEPTIONS FOR INDIVIDUAL STATES, IF ANY, WILL BE FOUND IN FOOTNOTES Order From: DPC", , 1 July 2001 (2001-07-01), pages 1-17, XP55722111, Retrieved from the Internet: URL:https://phpa.health.maryland.gov/OEHFP/OFPCHS/Milk/Shared%20Documents/DPC053_Vit amin_AD_Fortification_Fluid_Milk.pdf [retrieved on 2020-08-12]

(52) Cooperative Patent Classification (CPC): (Cont.)

C-Sets
A23V 2002/00, A23V 2250/1592, A23V 2250/702,
A23V 2250/71

**Description**

FIELD OF THE INVENTION

The invention relates to milk products supplemented with a functional food ingredient, particularly milk products fortified with one or more vitamins, such as vitamins A or D, or minerals, such as iron; and a process for producing such milk products. Typical milk products provided herein exhibit extended shelf-life.

BACKGROUND OF THE INVENTION

Micronutrient malnutrition is widespread in industrialized and developing countries, with many adverse effects on human health, and an associated economic burden. Although it may affect all age groups, infants and women of child-bearing age tend to be at highest risk. According to the World Health Organization (WHO) and the Food and Agricultural Organization of the United Nations (FAO), iron deficiency is the most common micronutrient deficiency, affecting over 2 billion people globally (World Health Organization and the Food and Agricultural Organization of the United Nations Guidelines on Food fortification with micronutrients, 2006 (hereinafter "The WHO/FAO Guidelines")). In addition, vitamin A deficiency is highly prevalent in pre-school children. It has been estimated that micronutrient deficiencies account for about 7.3% of the global burden of disease, with iron and vitamin A deficiency ranking among the 15 leading causes of global disease burden. Micronutrient deficiencies are typically addressed by public health programmes for fortification of staple foods, including milk and other dairy products.

An ideal iron fortificant should have high bioavailability and yet not cause unacceptable changes to the sensory properties of the food. The WHO/FAO Guidelines cautions that the presence of fortificant iron in certain food can cause rancidity and subsequent off flavours and that in the case of multiple fortification, free iron, produced from the degradation of iron compounds present in the food, can oxidize some of the vitamins supplied in the same fortificant mixture. In the case of milk, rancidity is caused by oxidation of the milk fat which is present in the cream fraction of milk. The WHO/FAO Guidelines advises that many soluble iron compounds cannot be used to fortify liquid whole milk because they cause rancidity and off flavours, and recommends that iron fortificants are added after the milk has been homogenised and the fat internalized in micelles, so as to help protect against oxidation.

A series of Guidelines for fortification of staple foods, "Fortification Basics", has been published as a joint effort of the USAID Micronutrient Programs and DSM Nutritional Products (http://www.dsm.com/products/nip/en US/publications-page/publications-fortificationbasics.html). According "Fortification Basics: Milk", fortification of liquid milk with vitamins A and/or D is very common, and is mandatory in many countries. Vitamins A and D are fat soluble, and it is recommended to first form a pre-mix of the vitamins in milk enriched with cream or oil, and to incorporate the vitamins into the fat phase by homogenisation. The homogenised pre-mix is then added to the bulk milk, which itself is supplemented with any added dry vitamins or minerals. The complete product is then subjected to heat treatment. These Guidelines reference O'Brien and Robertson, which states that it is essential to ensure a good distribution of vitamins A and D in the bulk milk prior to heat treatment (O'Brien A and Robertson D, P.B. Ottaway (ed.), The Technology of Vitamins in Food, Chapman & Hall, 1993). The latter also notes that dry water-dispersible forms of vitamins A and D may be less stable than oily forms in the final product because the carrier becomes hydrated causing the vitamin to be exposed to the milk processing parameters.

Milk and milk-derived products are heat treated in order to inactivate undesirable enzymes and destroy pathogenic and spoilage microorganisms. The heating process may additionally cause physical and chemical changes (protein denaturation, browning, etc.), which negatively affect the sensory characteristics and nutritional value of the product. Milk and milk-derived products may be treated by a range of processes, which differ in the severity of the heat treatment. The three general types of heat treatment (from mild to severe) are thermization, pasteurisation, and sterilization (Pieter Walstra, Jan T. M. Wouters, Tom J. Guerts. Dairy Science and Technology, Second edition, page 242-245). Thermization is a mild heat treatment (typically 57-68 °C for 15 sec.) sufficient to destroy gram negative psychrotrophic vegetative microorganisms and increase the refrigerated shelf-life. Pasteurisation (typically 72 degrees °C for 15 sec.) destroys most of the vegetative pathogenic organisms (bacteria, yeasts, and moulds), which may cause food poisoning. Sterilization is the most severe heat treatment (typically 121 °C for 3 min.) and destroys all microorganisms (vegetative and spores) or renders them incapable of further growth.

To extend the shelf life of milk at ambient temperature beyond several days, heating to a temperature in excess of 100 °C is required, however this causes undesirable changes in the milk: calcium precipitation, whey protein denaturation, Maillard browning, and modification of casein; these changes are important and affect the sensory characteristics, nutritional value, susceptibility to foul heat exchangers, and sediment formation. Ultra high temperature (UHT) processing is well-known as a continuous flow process, where the milk is heated in excess of 135 °C, held for approximately 4 sec, rapidly cooled, and aseptically packaged (H. G. Kessler. Food and Bio Process Engineering - Dairy Technology. Fifth edition, page 145; EU Commission Regulation No. EC 853/2004 & EC 1662/2006). UHT milk undergoes fewer chemical reactions than sterilized milk, resulting in a product that is whiter, tastes less caramelised and cooked, has reduced whey protein denaturation, and reduced loss of heat-sensitive vitamins. Even so, the development of off-flavours, especially stale or oxidized flavours, during storage is the most important factor limiting the acceptability of UHT milk. This off-flavour development is associated with chemical reactions and changes (e.g. Maillard reaction and browning) that occur during processing and that continue in subsequent storage.

Vitamin and mineral fortified liquid milk products are commercially available in the United Kingdom from Nutritia Limited (Wilts., UK), under the brand names Milupa Aptamil Growing Up Milk™ and Cow & Gate Growing Up Milk™. Both products contain skim milk, vegetable oils and a variety of other ingredients including iron and vitamins A and D3, and are UHT treated for extended shelf life. Neither product contains cream, and so neither can be considered to be a whole milk product. In whole milk, cream acts as a natural repository for fat-soluble vitamins, and confers a desirable flavour.

US 5,935,632 (Tetra Laval Holdings & Finance S.A.) discloses a method for continuous production of consumer milk in which a flow of skim milk is subjected to microfiltration and and pasteurisation, and is then combined with a flow of cream which has been subjected to a high temperature treatment at a temperature of at least 110 °C. The microfiltration is performed with a microfilter having a pore size of 0.05 to 2.0 μm. The combination of high heat treatment and pasteurisation of the skim milk is sufficient to reduce microbial load without unduly affecting sensory properties. The final product therefore has favourable sensory properties in addition to an extended shelf life. US 6,372,276 B1 (Tetra Laval Holdings & Finance S.A.) discloses a corresponding method in which a skim milk fraction is microfiltered with a microfilter having a pore size of about 0.5 μm or less, and heat treated, and then combined with a cream fraction which has been treated by UHT. US 2002/0028278 (Anders Lindquist) discloses an apparatus for microfiltering skim milk comprising a series of microfilters.

In the methods disclosed in US 5,935,632 and US 6,372,276 B1 (Tetra Laval Holdings & Finance S.A.) the cream may be homogenised, but not until after it is heat treated.

Homogenisation of the skim milk and cream phases may be performed after the skim milk has been microfiltered and pasteurised. If an iron fortificant were to be included in either of these methods after homogenisation, it can be envisaged that a further heat treatment step may be needed to ensure acceptable microbiological safety, leading to increased production costs and potentially also undesirable changes to the milk product, including deleterious effects on sensory properties. If fat-soluble vitamins were homogenised with the product before heat treatment, in accordance with recommendations, the need for a subsequent heat treatment step can also be envisaged. Thus, in either case, whether a vitamin or mineral is to be added before or after the homogenisation step, a subsequent heat treat treatment step may be needed.

WO 2010/085957 A2 discloses long shelf life milk and milk-related products, and a process and milk processing plant for their manufacture. WO 96/36238 A1 discloses a method for producing consumer milk with good keeping qualities. Olivares et al., 1997, J. Nutr., 127(7):1407-11 discloses that milk inhibits and ascorbic acid favors ferrous bis-glycine chelate bioavailability in humans. USAID DSM Nutritional Products, 1998, discloses fortification basics for milk. Hinckley *et al.,* 2001, The Dairy Practices Guidelines Publication DPC 53 discloses guidelines for vitamin A & D fortification of fluid milk.

Further methods of enriching or fortifying liquid milk products with vitamins and minerals are needed, especially in relation to milk products which contain cream. Such products should maintain acceptable microbial safety standards and shelf-life, and retain satisfactory sensory properties.

SUMMARY OF THE INVENTION

The invention is as set out in the claims.

Provided herein is a method for producing a supplemented milk product, the method comprising the steps of:

(i) Providing a cream fraction and adding at least one thermostable functional food ingredient admixed with a liquid to the cream fraction to obtain a supplemented cream fraction, wherein the at least one thermostable functional food ingredient comprises one or more minerals or vitamins selected from iron, vitamin A, and vitamin D;

(ii) Heat treating the supplemented cream fraction at a temperature of at least 100 °C for a time period sufficient to obtain a heat treated cream fraction having a reduced microbial load;

(iii) Providing an aqueous milk fraction;

(iv) Optionally physically separating microorganisms from the aqueous milk fraction to obtain an aqueous milk fraction having a reduced microbial load;

(v) Combining the aqueous milk fraction having a reduced microbial load with the heat treated cream fraction; and

(vi) Pasteurising the aqueous milk fraction before, during or after it is combined with the heat treated cream fraction; wherein the iron content of the product is ≥0.7 mg/100mL product, the vitamin A content of the product is ≥40 μg/100mL product, and/or the vitamin D content of the product is ≥0.25 μg/100mL product.

Also disclosed herein is a supplemented milk product prepared according to the method provided herein.

Also provided herein is a supplemented milk product comprising:

(a) at least one thermostable functional food ingredient comprising one or more minerals or vitamins selected from iron, vitamin A, and vitamin D;
(b) aqueous milk from which microorganisms have been physically separated and which has been subjected to pasteurisation;
(c) cream which has been heat treated at a temperature of at least 100 °C for a time period sufficient to obtain cream having a reduced microbial load;

wherein the iron content is ≥0.7 mg/100mL product, the vitamin A content is ≥40 μg/100mL product, and/or the vitamin D content is ≥0.25 μg/100mL product; and
wherein the aqueous milk has not been subjected to heat treatment at a temperature of at least 88 °C.

Also disclosed herein is a use of a supplemented milk product provided herein to make a supplemented dairy product.

BRIEF DESCRIPTION OF THE DRAWINGS

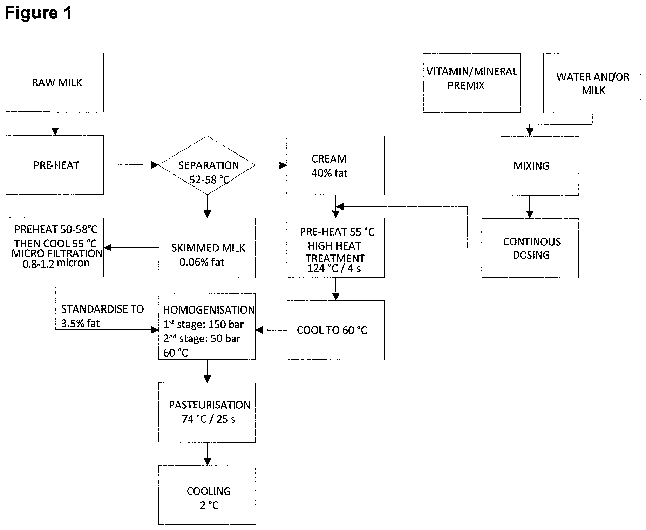

Figure 1: Schematic diagram illustrating exemplary process steps used in producing a vitamin and mineral-supplemented whole milk product as described in Example 1.

DETAILED DESCRIPTION OF PREFERRED EMBODIMENTS

Provided herein is a method for producing a supplemented milk product, the method comprising the steps of:

(i) Providing a cream fraction and adding at least one thermostable functional food ingredient admixed with a liquid to the cream fraction to obtain a supplemented cream fraction, wherein the at least one thermostable functional food ingredient comprises one or more minerals or vitamins selected from iron, vitamin A, and vitamin D;

(ii) Heat treating the supplemented cream fraction at a temperature of at least 100 °C for a time period sufficient to obtain a heat treated cream fraction having a reduced microbial load;

(iii) Providing an aqueous milk fraction;

(iv) Optionally physically separating microorganisms from the aqueous milk fraction to obtain an aqueous milk fraction having a reduced microbial load;

(v) Combining the aqueous milk fraction having a reduced microbial load with the heat treated cream fraction; and

(vi) Pasteurising the aqueous milk fraction before, during or after it is combined with the heat treated cream fraction; wherein the iron content of the product is ≥0.7 mg/100mL product, the vitamin A content of the product is ≥40 μg/100mL product, and/or the vitamin D content of the product is ≥0.25 μg/100mL product.

According to the method, a supplemented milk product is made by providing a cream fraction; an aqueous milk fraction; and at least one thermostable functional food ingredient admixed with a liquid. These components are provided, combined and treated as described in steps (i) to (v) above.

The "cream fraction" is derived from "milk", which is the liquid secreted by the mammary glands of female mammals, serving for the nourishment of their young. Sources of milk include, but are not limited to cow, sheep, goat, buffalo, camel, llama, mare, deer and human. Typically, the milk is bovine milk.

By "cream", we mean the part of milk rich in fat which has been separated by skimming or otherwise. The cream fraction may comprise or consist of cream. Typically, the cream fraction comprises at least 12% w/w milk fat in combination with the aqueous phase of the milk from which the milk fat is obtained. Thus, the cream fraction may be a fraction of milk which is enriched with respect to the milk fat content of the milk. The cream fraction may be selected from double cream, which contains not less than 48% w/w milk fat, and typically 55% w/w milk fat; whipping cream, which contains not less than 35% w/w milk fat, and typically 35% w/w milk fat; single cream, which contains not less than 18% wt/wt milk fat, and typically contains approximately 18% w/w milk fat; and half cream, which contains not less than 12% wt/wt milk fat, and typically contains approximately 12% wt/wt milk fat. A higher milk fat content is preferred, in order that the quantity of the aqueous phase subjected to the heat treatment along with the milk fat is reduced, because the heat treatment step may adversely affect sensory properties of the aqueous phase. The cream fraction may be obtained by separation of milk, which typically provides a cream fraction having 35 to 50% wt/wt milk fat from the separator, although the fat content may be as low as 15 to 16% wt/wt or as high as 54% wt/wt. Cream may be prepared by separation of milk using a centrifugal separator (R. K. Robinson. Modern Dairy Technology. Advances in milk processing. Volume 1, second edition, page 63).

Typically the cream fraction is obtained directly from raw milk, which is milk which has not been pasteurised or homogenised. The raw milk may nevertheless be pre-heated prior to and/or during separation. Warm separation is typically performed at temperatures of above the melting point of fats i.e. above 45 °C, such as from about 45 °C to 70 °C, although preferably not higher than 65 °C. Alternatively, cold separation is typically performed at temperatures below 10 °C, such as from 2 to 10 °C. The raw milk may therefore be maintained at a temperature of from 2 to 70 °C prior to and/or during separation. It is also contemplated that the cream fraction, or the milk from which it is obtained, may be heat treated prior to step (ii) of the method.

Typically, the milk fat of the cream fraction is present in the form of native milk fat globules, as are found in raw milk. In raw milk, typically more than 95% of the total milk fat is in the form of milk fat globules ranging in size from 0.1 to 15 $\mu$m in diameter. Milk fat globules comprise liquid fat covered by a membrane of 8 to 10 nm in thickness. The membrane of each milk fat globule is derived from the secretory cell of the mammary gland as it is produced, and is composed mainly of phospholipids and proteins. Homogenisation disrupts the native milk fat globule structure (Pieter Walstra, Jan T. M. Wouters, Tom J. Geurts. Dairy Science and Technology. Second edition, page 279-296).

The "aqueous milk fraction" provided in step (iii) of the method is derived from milk or a milk derivative. Suitable mammalian sources of milk are as described above, and typically, the milk is bovine milk. By "aqueous", we mean that the predominant liquid is water, as opposed to milk fat. Typically the "aqueous milk fraction" comprises no more than 4% w/w milk fat, and may be whole milk, which typically contains approximately 3.5% w/w fat. Suitably, it contains no more than 2% w/w milk fat, and may be low-fat milk which typically contains approximately 1 to 2% w/w fat. Suitably, it contains no more than 1% w/w milk fat, and may be skim milk, which typically contains approximately 0.5% w/w fat. It may contain no more than 0.5% or 0.1% fat, for example 0.05% fat. It is preferred to use an aqueous milk fraction containing a low fat content, in order that the majority of the milk fat be provided in step (i) of the method. Typically, the aqueous milk fraction is derived from raw milk, such as be separation on a centrifugal separator.

In a particular embodiment, the aqueous milk fraction and the cream fraction are prepared by separating milk. In this embodiment, the milk is separated and then re-combined in step (v), thus providing a particularly efficient process.

The term "milk derivative" refers to any aqueous component derived from milk which has been subjected to a processing step other than merely separation, and includes whey or milk serum. By "whey" or "milk serum" is meant the milk component remaining after all or a substantial portion of the milk fat and casein contained in milk, are removed. The term whey also encompass so-called sweet whey, which is the by-product of rennet-based cheese production, and acid whey, which is the by-product of the acidification of milk which typically takes place during the production of caseinate or quark and cream cheese. "Milk derivative" also includes lactose-free or lactose-reduced milk (produced by hydrolyzing the lactose by lactase enzyme to glucose and galactose, or by other methods such as nanofiltration, electrodialysis, ion exchange chromatography and centrifugation technology); and concentrated milk.

In addition to the cream fraction and the aqueous milk fraction, the method requires the provision of at least one "thermostable functional food ingredient admixed with a liquid". A "functional food" is a food given an additional function related to health-promotion or disease prevention by the addition of a new ingredient or more of an existing ingredient. "Functional food ingredient" is to be interpreted accordingly. The function is related to a biological activity of the food ingredient which can exert its effect following ingestion. In the context of a milk product as provided herein, which ultimately contains an aqueous milk fraction that has been pasteurised, and a cream fraction that has been high heat treated, the addition of bulk fat or protein is not envisaged within the meaning of "functional food ingredient". Nevertheless, fats or oils with specific health benefits, may be included. For example, omega-3 fatty acids, which are regarded as essential fatty acids, such as $\alpha$-linolenic acid (ALA), eicosapentaenoic acid (EPA), docosahexaenoic acid (DHA), may be included. Likewise, proteins with specific health benefits may be included. Typical functional food ingredients include vitamins, essential minerals, essential fatty acids, essential amino acids, phytonutrients and enzymes.

According to a particular embodiment, the functional food ingredient is a vitamin or mineral, which may be an essential vitamin or mineral, referred to as a micronutrient.

A vitamin is an organic compound required by an organism as a vital nutrient in limited amounts. Thirteen vitamins are universally recognised at present. Vitamins are classified by their biological and chemical activity, not their structure. Thus, each "vitamin" refers to a number of vitamer compounds that all show the biological activity associated with a particular vitamin. Such a set of chemicals is grouped under an alphabetized vitamin "generic descriptor" title, such as "vitamin A", which includes the compounds retinal, retinol, and beta- carotene. Vitamers by definition are convertible to the active form of the vitamin in the body, and are sometimes inter-convertible to one another, as well. The following are fat soluble vitamins: A (retinol, retinyl ester, retinal, retinoic acid, provitamin A carotenoids and provitamin A xanthophyll beta-cryptoxanthin), D (cholecalciferol, ergocalciferol), E (tocopherols, tocotrienols), and K (phylloquinone, menaquinones). The following are water soluble vitamins: B1 (thiamine), B2 (riboflavin), B3 (niacin, niacinamide), B5 (pantothenic acid), B6 (pyridoxine, pyridoxamine, pyridoxal), B7 (biotin), B9 (folic acid, folinic acid), B12 (cyanocobalamin, hydroxycobalamin, methylcobalamin) and C (ascorbic acid). Together, these make up the thirteen known vitamins.

Suitable minerals required in small quantities of less than about 100 mg/day are known as microminerals, and include iron, cobalt, copper, zinc, molybdenum, iodine, bromine and selenium.

The functional food ingredient to be used in the method provided herein is "thermostable", meaning that a substantial proportion of it retains its function following the heat treatment step (ii), and the pasteurisation step (vi) if such is applied to the cream fraction. Typically, at least 10%, at least 20%, at least 30%, at least 40%, at least 50%, at least 60%, at least 70%, at least 80%, at least 90%, and up to 100% of the biological activity or function of the functional food ingredient is retained following the heat treatment step (ii). In the practice of the method provided herein, a corresponding overage of the thermostable functional food ingredient is included in step (i) in order to compensate for losses during the overall process.

Thermostability can be tested by assaying the activity of a sample of the functional food ingredient which has been subjected to the heat treatment step or steps, and a sample which has not been subjected to the heat treatment step or steps, and comparing the activities of the samples. The thermostability of a variety of functional food ingredients, particularly vitamins and minerals, in conventional dairy pasteurisation and UHT processes, is known in the art. In Table 1 below, "Fortification Basics: Milk" (supra) provides information about losses of specific vitamins and minerals during heat treatments of milk, in the form of overages required to compensate for the losses.

**Table 1: Recommended overages (%) for selected nutrients in milk forms**

| Nutrient | Pasteurised | UHT |
|---|---|---|
| Vitamin A | 20 | 30 |
| Vitamin D | 20 | 30 |
| Vitamin E | 10 | 30 |
| Vitamin B1 | 25 | 50 |
| Vitamin B2 | 15 | 40 |
| Niacin | 15 | 20 |
| Vitamin B6 | 30 | 30 |
| Vitamin B12 | 15 | 30 |
| Folate | 20 | 40 |
| Vitamin C | 30 | 100 |
| Iron | 5 | 5 |
| Calcium | 5 | 5 |

The skilled worker can apply these overages in the practice of the method provided herein, and refine them if needed.

A "supplemented milk product" as made by the method provided herein, is one which has been supplemented by the addition of the thermostable functional food ingredient as in step (i). By "supplemented" we include "fortified" or "enriched". As defined by the World Health Organization (WHO) and the Food and Agricultural Organization of the United Nations (FAO), fortification refers to "the practice of deliberately increasing the content of an essential micronutrient, i.e. vitamins and minerals (including trace elements) in a food irrespective of whether the nutrients were originally in the food before processing or not, so as to improve the nutritional quality of the food supply and to provide a public health benefit with minimal risk to health" whereas enrichment is defined as "synonymous with fortification and refers to the addition of micronutrients to a food which are lost during processing" (World Health Organization and the Food and Agricultural Organization of the United Nations Guidelines on Food fortification with micronutrients http://www.who.int/nutrition/publications/guide_food_fortification_micronutrients.pdf).

Suitably one, two, three, four or more thermostable functional food ingredients are added in step (i). Suitably these may be one, two, three, four or more vitamins or minerals.

According to one embodiment, the one or more vitamins or minerals comprises iron. Iron compounds used as fortificants can be divided into three categories: water soluble; poorly water soluble but soluble in dilute acid; and water insoluble and poorly soluble in dilute acid. Iron compounds having the best bioavailability tend to interact with food constituents to product undesirable sensory changes. Iron compounds may be encapsulated, i.e. coated with a coating in order to physically separate the iron from other food components. Encapsulated iron compounds can be regarded as a fourth category of iron fortificant. Iron fortificants from any of the above four categories may be suitable for use in the method or product provided herein. Powder forms are preferred for ease of use.

Relative bioavailability is a measure which scores the absorbability of an iron compound by comparing its absorbability to that of the reference nutrient ferrous sulphate, which is considered as having the most efficient absorbability. Table 2 indicates the iron content and relative bioavailability of iron compounds (WHO/FAO Guidelines, supra). Any of these forms may be suitable for use in the method or product provided herein.

**Table 2: Key characteristics of iron fortificants**

| Compound | Iron content | Relative bioavailability[a] |
|---|---|---|
| *Water soluble* | | |
| Ferrous sulphate.7H$_2$0 | 20 | 100 |
| Ferrous sulphate dried | 33 | 100 |
| Ferrous gluconate | 12 | 89 |
| Ferrous lactate | 19 | 67 |
| Ferrous bis-glycinate | 20 | >100[b] |
| Ferric ammonium citrate | 17 | 51 |
| Sodium iron EDTA | 13 | >100[b] |
| *Poorly water soluble, soluble in dilute acid* | | |
| Ferrous fumarate | 33 | 100 |
| Ferrous succinate | 33 | 92 |
| Ferric saccharate | 10 | 74 |
| *Water insoluble poorly soluble in dilute acid* | | |
| Ferric orthophosphate | 29 | 25-32 |
| Ferric pyrophosphate | 25 | 21-74 |
| Elemental iron | - | - |
| H-reduced | 96 | 13-148[c] |
| Atomized | 96 | (24) |
| CO-reduced | 97 | (12-32) |
| Electrolytic | 97 | 75 |
| Carbonyl | 99 | 5-20 |
| *Encapsulated forms* | | |
| Ferrous sulphate | 16 | 100 |

(continued)

| Encapsulated forms | | |
|---|---|---|
| Ferrous fumarate | 16 | 100 |

EDTA, ethylenediamineteraacetate; H-reduced, hydrogen reduced; CO-reduced, carbon monoxide reduced.

a Relative to hydrated ferrous sulfate (FeSO4.7$H_2O$), in adult humans. Values in parenthesis are derived from studies in rats.

b Absorption is two-three times better than that from ferrous sulfate if the phytate content of food vehicle is high.

c The high value refers to a very small particle size which has only been used in experimental studies.

Suitably the iron is in a water-soluble form, such as selected from the group ferrous sulphate, ferrous gluconate, ferrous lactate, ferrous bis-glycinate, ferric ammonium citrate, and sodium iron EDTA. Suitably the iron is a ferrous compound, such as selected from the group ferrous sulphate, ferrous gluconate, ferrous lactate, ferrous bis-glycinate and sodium iron EDTA. Suitably, the ferrous compound is ferrous bis-glycinate, sodium iron EDTA or ferrous lactate, preferably ferrous bis-glycinate or ferrous lactate.

Iron compounds are typically admixed with an aqueous solution in the method or product provided herein. Some compounds tend to produce an acidic or an alkaline solution, and a buffer is typically included to maintain the pH within a suitable range. The type and amount of buffer may be selected such that the addition of the admixture to the cream fraction does not change the pH of the cream fraction by greater than 0.1 to 0.2 pH points. An excessive change in pH of the cream fraction may cause the casein to agglomerate and whey proteins to denature when the cream fraction is heated, which may adversely affect the process. A typical pH for the cream fraction is between 6.55 and 6.7.

Surprisingly, the inventors have shown that the addition of water-soluble iron compounds does not cause detectable oxidation of the cream, even though the iron compound is added to the cream before the high heat treatment. The iron compound is typically added to cream which has not be homogenised, contrary to the advice in the WHO/FAO Guidelines (*supra*). The lack of oxidation may be verified by taste testing of the product, as described in the Examples. The trained panel of testers was unable to taste oxidation of the cream in the product provided herein. Oxidation of milk by iron can also be determined quantitatively by the Thiobarbituric acid (TBA) test, as described in Lee et al (2004) Biosci. Biotechnol. Biochem. 68: 495-500; King (1962) Journal of Dairy Science 45: 1165-1171. An acceptable degree of oxidation, which corresponds to a questionable to very slight oxidised flavour in taste testing, is less than 0.029 optical density units at wavelength of 532 nm in the test procedure described in King (*supra*). Iron compounds may be tested for suitability for use in the method or product provided herein by preparing batches of milk product according to the method of the method or product provided herein and subjecting them to taste testing or the TBA test.

Ascorbic acid (vitamin C) may be included as a "conditioner" in fortificant compositions which contain iron, in order to increase the bioavailability of the iron (FAO/WHO Guidelines, *supra*). Suitably, ascorbic acid and iron may be included at a 2:1 molar ratio. Citric acid may also be included as a conditioner.

Intake recommendations for iron and other nutrients are provided in the Dietary Reference Intakes (DRIs) developed by the Food and Nutrition Board (FNB) at the Institute of Medicine of the National Academies (Iron Dietary Supplement Fact Sheet, National Institutes of Health, Office of Dietary Supplements, 2014). DRI is the general term for a set of reference values used for planning and assessing nutrient intakes of healthy people. These values, which vary by age and gender, include: Recommended Dietary Allowance (RDA): average daily level of intake sufficient to meet the nutrient requirements of nearly all (97%-98%) healthy individuals; Adequate Intake (AI): established when evidence is insufficient to develop an RDA and is set at a level assumed to ensure nutritional adequacy. RDAs for iron are shown in Table 3 below.

**Table 3: Recommended Dietary Allowances (RDAs) for Iron[a]**

| Age | Male | Female | Pregnancy | Lactation |
|---|---|---|---|---|
| Birth to 6 months | 0.27 mg[b] | 0.27 mg[b] | | |
| 7-12 months | 11 mg | 11 mg | | |
| 1-3 years | 7 mg | 7 mg | | |
| 4-8 years | 10 mg | 10 mg | | |
| 9-13 years | 8 mg | 8 mg | | |
| 14-18 years | 11 mg | 15 mg | 27 mg | 10 mg |
| 19-50 years | 8 mg | 18 mg | 27 mg | 9 mg |

(continued)

| Age | Male | Female | Pregnancy | Lactation |
|---|---|---|---|---|
| 51+ years | 8 mg | 8 mg | | |

a Iron RDAs given above are for non-vegetarians. The RDAs for vegetarians are 1.8 times higher than for people who eat meat. This is because heme iron from meat is more bioavailable than nonheme iron from plant-based foods, and meat, poultry, and seafood increase the absorption of nonheme iron.

b Adequate Intake (AI), equivalent to the mean intake of iron in healthy, breastfed infants.

According to the Iron Dietary Supplement Fact Sheet (supra) infants, especially those born preterm or with low birthweight or whose mothers have iron deficiency, are particularly at risk of iron deficiency because of their high iron requirements due to their rapid growth. Full-term infants usually have sufficient iron stores and need little if any iron from external sources until they are 4 to 6 months old. However, full-term infants have a risk of becoming iron deficient at 6 to 9 months unless they obtain adequate amounts of solid foods that are rich in bioavailable iron or iron-fortified milk formula.

According to one embodiment, the one or more minerals or vitamins provided in step (i) comprises at least one fat-soluble vitamin, optionally selected from vitamin A and vitamin D.

Vitamin A and D fortificants are available as oily forms, which can be incorporated directly into fat-based foods or emulsified into water-based foods including milk; and dry forms, which can be dispersed in water (The WHO/FAO Guidelines). Combined vitamin A and D fortificants are also available in oily and dry forms. Because vitamins A and D are fat-soluble, formulation compositions and methods are typically interchangeable for either vitamin, with the exception that water-based emulsions containing vitamin A are not preferred for extended storage, because the vitamin A may oxidise.

Vitamin A is a group of unsaturated fat-soluble retinoids (Vitamin A factsheet for health professionals, National Institutes of Health, Office of Dietary Supplements, 2013; Bendich and Olson (1989) FASEB J 3: 1927-1932). Typical dietary forms of provitamin A are preformed vitamin A (retinol and its esterified form, retinyl ester) and provitamin A carotenoids and beta-cryptoxanthin. Both provitamin A and retinol must be metabolized intracellularly to retinal and retinoic acid, which are the biologically active forms. Any of the forms of vitamin A may be included, namely retinol, retinyl ester, retinal, retinoic acid, provitamin A carotenoids selected from beta-carotene, alpha-carotene, gamma-carotene and the provitamin A xanthophyll beta-cryptoxanthin, or combinations thereof. Commercially available forms of vitamin A for use as dietary supplements and fortificants include retinyl esters, typically retinyl acetate, retinyl palmitate, retinyl proprionate or combinations thereof; and beta-carotene.

An oily form of vitamin A may be a retinyl ester as is or diluted with a suitable vegetable oil (The WHO/FAO Guidelines). Oily forms may be stabilised with an antioxidant. Dry powder forms may be encapsulated: the vitamin A is embedded in a water-soluble matrix, e.g. gelatin, gum acacia and/or starch, and may be stabilised with an antioxidant (The WHO/FAO Guidelines). In one commercially available dry powder from, retinyl acetate is embedded in gum acacia and stabilised with tocopherol as antioxidant (DSM Nutritional Products, Inc.). In another, retinyl acetate is finely dispersed in a cornstarch-coated matrix of acacia and maltodextrin, to which tocopherol is added as antioxidant (Vitamin A Acetate 325 CWS/A; LycoRed Limited, Israel). Oily forms may contain one or more emulsifying agents to facilitate emulsification. An oily form comprising vitamin A palmitate, vitamin D3, vegetable oil, polysorbate 80 (emulsifying agent) and glycerol monooleate (emulsifying agent) is described in US 5,480,661 (Consolidated Flavor Corporation).

The FNB established RDAs for vitamin A which are given as $\mu$g of retinol activity equivalents (RAE) to account for the different bioactivities of retinol and provitamin A carotenoids (see Table 4 below). Because the body converts all dietary sources of vitamin A into retinol, 1 $\mu$g of physiologically available retinol is equivalent to the following amounts from dietary sources: 1 $\mu$g of retinol, 12 $\mu$g of beta-carotene, and 24 $\mu$g of alpha-carotene or beta-cryptoxanthin. From dietary supplements, the body converts 2 $\mu$g of beta-carotene to 1 $\mu$g of retinol. Currently, vitamin A is listed on food and supplement labels in international units (IUs). Conversion rates between $\mu$g RAE and IU are as follows:

1 IU retinol = 0.3 $\mu$g RAE
1 IU beta-carotene from dietary supplements = 0.15 $\mu$g RAE
1 IU beta-carotene from food = 0.05 $\mu$g RAE
1 IU alpha-carotene or beta-cryptoxanthin = 0.025 $\mu$g RAE.

**Table 4: Recommended Dietary Allowances (RDAs) for Vitamin A**

| Age | Male | Female | Pregnancy | Lactation |
|---|---|---|---|---|
| 0-6 months* | 400 µg RAE | 400 µg RAE | | |
| 7-12 months* | 500 µg RAE | 500 µg RAE | | |
| 1-3 years | 300 µg RAE | 300 µg RAE | | |
| 4-8 years | 400 µg RAE | 400 µg RAE | | |
| 9-13 years | 600 µg RAE | 600 µg RAE | | |
| 14-18 years | 900 µg RAE | 700 µg RAE | 750 µg RAE | 1,200 µg RAE |
| 19-50 years | 900 µg RAE | 700 µg RAE | 770 µg RAE | 1,300 µg RAE |
| 51+ years | 900 µg RAE | 700 µg RAE | | |

* Adequate Intake (AI), equivalent to the mean intake of vitamin A in healthy, breastfed infants.

Vitamin D is a group of fat-soluble secosteroids (Vitamin D factsheet for health professionals, National Institutes of Health, Office of Dietary Supplements, 2011). The most important compounds in this group are vitamin $D_3$ (also known as cholecalciferol) and vitamin $D_2$ (ergocalciferol), which can be ingested from the diet and from supplements. The body can also synthesize vitamin D (specifically cholecalciferol) in the skin, from cholesterol, when sun exposure is adequate. Vitamin D obtained from sun exposure, food, and supplements is biologically inert and must undergo two hydroxylations in the body for activation. The first occurs in the liver and converts vitamin D to 25-hydroxyvitamin D [25(OH)D], also known as calcidiol. The second occurs primarily in the kidney and forms the physiologically active 1,25-dihydroxyvitamin D [1,25(OH)$_2$D], also known as calcitriol. The Martindale Complete Drug Reference also list the following as forms of vitamin D: alfacalcidol, dihydrotachysterol, doxercalciferol, falecalcitriol, maxacalcitol and paricalcitol.

Any of the forms of vitamin D may be included, namely ergocalciferol, cholecalciferol, calcidiol, calcitriol, alfacalcidol, dihydrotachysterol, doxercalciferol, falecalcitriol, maxacalcitol, paricalcitol or combinations thereof. Commercially available forms of vitamin D for use as dietary supplements include ergocalciferol and cholecalciferol that differ chemically only in their side-chain structure. The two forms have traditionally been regarded as equivalent based on their ability to cure rickets and, indeed, most steps involved in the metabolism and actions of vitamin $D_2$ and vitamin $D_3$ are identical. Both forms (as well as vitamin D in foods and from cutaneous synthesis) effectively raise serum 25(OH)D levels.

Oily forms for use as fortificants are typically vitamin D in a suitable vegetable oil (The WHO/FAO Guidelines). Oily forms may be stabilised with an antioxidant. Dry powder forms may be encapsulated: the vitamin D is embedded in a water-soluble matrix, e.g. gelatin, gum acacia and/or starch, and may be stabilised with an antioxidant (The WHO/FAO Guidelines). Oily forms may contain one or more emulsifying agents to facilitate emulsification. An oily form comprising vitamin A palmitate and vitamin D3 is described above (US 5,480,661; Consolidated Flavor Corporation). A vitamin D3 emulsion is described in WO 96/31130 (Abbott Laboratories), which includes gum arabic (also known as gum acacia) as emulsifier. The emulsion is formed by hydrating the gum in water, to which liquid vitamin D3 in corn oil or partially hydrogenated soybean oil is then added. The pH is reduced to 4.0 and sodium benzoate added as preservative. The mixture is then homogenized twice with a two stage homogenizer. A dry powder form is prepared by spray drying onto a fluidized powder containing, for example, calcium glycerophosphate as carrier. In one commercially available dry powder form, vitamin D is microencapsulated with maltodextrin and ethylcellulose and stabilised with tocopherol (CapsuDar™ D3-100E; LycoRed Bio Ltd., Israel). In another, vitamin D is spray dried with modified starches, sugar, medium chain triglycerides and tocopherol (CapsuDar™ D3 100 CWS; LycoRed Bio Ltd., Israel). WO 03/026445 (The Coca-Cola Company) describes a vitamin D3 premix containing a cold water soluble dry vitamin D3 (Type 100 CWS/A), maltodextrin (carrier), ascorbic acid and tocopherol (antioxidants). The composition of the vitamin D3 Type 100 CWS/A is 35-40% sucrose, 35-40% acacia gum, 15-20% corn modified starch, 5-10% soy oil, <1% dl-alpha-tocopherol, <1% crystalline vitamin D3.

A spray-drying method for preparing dry powder forms of fat-soluble vitamins consists of five phases as described below.

1. Feed preparation: The feed is prepared as a homogenous, pumpable and free from impurities solution, suspension or paste.

2. Atomization (transforming the feed into droplets): The degree of atomization controls the drying rate and therefore the dryer size. Suitably, pressure nozzle atomization is used to create a spray by forcing the fluid through an orifice. This is an energy efficient method which also offers the narrowest particle size distribution.

3. Drying: A constant rate phase ensures moisture evaporates rapidly from the surface of the particle. This is followed by a falling rate period where the drying is controlled by diffusion of water to the surface of the particle.

4. Separation of powder from moist gas: This is typically carried out in an economical (e.g. recycling the drying medium) and pollutant-free manner. Fine particles are removed with cyclones, bag filters, precipitators or scrubbers.

5. Cooling and packaging.

The vitamin A and D dry powders described in the Examples were made according to this method. Suitable spray dryers are available from GEA Niro (Denmark), such the Type VSD 12.5 R/N (2007). Further information about spray drying techniques can be found in "Encapsulation of nano-emulsions by spray drying: Optimization of the process", by Seid Mahdi Jafari, 2009, LAP Lambert Academic Publishing.

The FNB established an RDA for vitamin D representing a daily intake that is sufficient to maintain bone health and normal calcium metabolism in healthy people. RDAs for vitamin D are listed in both International Units (IUs) and micrograms ($\mu$g); the biological activity of 40 IU is equal to 1 $\mu$g (Table 5). Even though sunlight may be a major source of vitamin D for some, the vitamin D RDAs are set on the basis of minimal sun exposure.

Table 5: Recommended Dietary Allowances (RDAs) for Vitamin D

| Age | Male | Female | Pregnancy | Lactation |
|---|---|---|---|---|
| 0-12 months* | 400 IU (10 $\mu$g) | 400 IU (10 $\mu$g) | | |
| 1-13 years | 600 IU (15 $\mu$g) | 600 IU (15 $\mu$g) | | |
| 14-18 years | 600 IU (15 $\mu$g) | 600 IU (15 $\mu$g) | 600 IU (15 $\mu$g) | 600 IU (15 $\mu$g) |
| 19-50 years | 600 IU (15 $\mu$g) | 600 IU (15 $\mu$g) | 600 IU (15 $\mu$g) | 600 IU (15 $\mu$g) |
| 51-70 years | 600 IU (15 $\mu$g) | 600 IU (15 $\mu$g) | | |
| >70 years | 800 IU (20 $\mu$g) | 800 IU (20 $\mu$g) | | |
| * Adequate Intake (AI) | | | | |

The American Academy of Pediatrics (AAP) recommends that exclusively and partially breastfed infants receive supplements of 400 IU/day of vitamin D shortly after birth and continue to receive these supplements until they are weaned and consume ≥1,000 mL/day of vitamin D-fortified formula or whole milk. Similarly, all non-breastfed infants ingesting <1,000 mL/day of vitamin D-fortified formula or milk should receive a vitamin D supplement of 400 IU/day. AAP also recommends that older children and adolescents who do not obtain 400 IU/day through vitamin D-fortified milk and foods should take a 400 IU vitamin D supplement daily.

According to one embodiment, the one or more minerals or vitamins provided in step (i) comprises iron and at least one fat-soluble vitamin, optionally selected from vitamin A and vitamin D. The supplement may contain iron and vitamin A, or iron and vitamin D, or all three of iron, vitamin A and vitamin D. Where an oily form of a fat-soluble vitamin is included, it is preferred to provide the iron compound separately as an admixture with an aqueous solution. It has been found that emulsions of iron compounds in oil having acidic pH caused acidification when added to the cream.

According to step (i) of the method, the at least one thermostable functional food ingredient is admixed with a liquid. Suitable liquids may be aqueous or oily, and may be chosen as appropriate depending on the formulation of the thermostable functional food ingredient. Suitable aqueous liquids are water or an aqueous milk fraction, as defined above. Suitable oily liquids are a cream fraction, as defined above, or a vegetable oil.

Suitably, the at least one thermostable functional food ingredient admixed with a liquid is provided by:

(i) providing the at least one thermostable functional food ingredient as one or more dry powders and admixing the one or more dry powders with an aqueous liquid such that each of the at least one thermostable functional food ingredients forms a solution, a suspension or an emulsion with the aqueous liquid;

(ii) providing the at least one thermostable functional food ingredient as one or more dry powders and admixing the one or more dry powders with an oily liquid such that each of the at least one thermostable functional food ingredients forms a solution, a suspension or an emulsion with the oily liquid.

Dry powders are preferred for their ease of use, particularly where each of the thermostable functional food ingredients is provided in a single blend. Carriers may be included in blends, in order to improve consistency of the composition. However, one may also combine individual dry powder forms in the preparation of the at least one thermostable functional food ingredient admixed with the liquid. Oily forms are also envisaged, particularly comprising the fat-soluble vitamins, and these may be admixed with the aqueous or oily liquid. Each of the thermostable functional food ingredients should form a solution, suspension or emulsion with the aqueous liquid. Notably, different components may produce different types of admixtures. For example, a powdered iron source may form a solution, whereas encapsulated forms of fat-soluble vitamins, such as vitamins A or D, may form a suspension in an aqueous liquid if their coating does not dissolve in the liquid, or an emulsion if it does dissolve.

Admixing may be performed in a closed system using high shear or circulation, for example using a turbine impeller or paddle stirrer (H. G. Kessler. Food and Bio Process Engineering - Dairy Technology. Fifth edition, pages 553-557). If a suspension or emulsion is obtained, it is preferred that the functional food ingredients in the suspension or emulsion are uniformly dispersed within the liquid without the need for continued agitation or mixing. The liquid may be checked visually or spectrophotometrically for the formation of a sediment. Homogeneity may be restored, if necessary, by circulation until and during the dosing into the cream.

In one embodiment, iron and at least one fat-soluble vitamin, typically vitamin A and/or vitamin D, are provided as a dry powder. The dry powder is admixed with an aqueous liquid, typically water or an aqueous milk fraction.

According to step (i) of the method, the admixture is added to the cream fraction.

Typically, the process is implemented as a continuous process. The admixture is typically added by metered addition to a continuous flow of cream imminently prior to the high heat treatment. Alternatively, a batch process may be implemented, in which the admixture is added to a batch of the cream prior to heat treatment. Methods of batch and metered addition of vitamins in dairy processes are described in Guidelines for Vitamin A and D Fortification of Fluid Milk, The Dairy Practices Council, Publication DPC 53, July 2001.

According to step (ii) of the method, the supplemented cream fraction is heat treated at a temperature of at least 100 °C for a time period sufficient to obtain a heat treated cream fraction having a reduced microbial load.

The supplemented cream fraction may be subjected to sterilization in step (ii), typically by heating at 121 °C for 3 minutes. In a continuous flow process, the supplemented cream fraction may be subjected to Ultra high temperature (UHT) processing. This requires heating in excess of 135 °C, holding for between 1 and 10 seconds, such as 4 seconds, and rapid cooling. UHT can involve using traditional heat exchangers to heat and cool the cream fraction (indirect UHT) or direct mixing of cream fraction and steam followed by cooling to remove the condensed steam (direct UHT). Suitably, the cream fraction is heat treated at a temperature in the range of 100-180 °C for a period of 10 msec to 10 sec, such as 100-134.9 °C for a period of 0.5-10 seconds. In an example, the cream fraction is heated to 124 °C for 4 seconds. Alternatively, the cream fraction may be heat-treated at a temperature in the range of 135-180 °C for a period of 10 msec to 4 seconds.

The relationship between the process parameters and the time in which a composition is kept in the HT-treatment temperature range, sometimes referred to as the "holding time", is typically provided by the equipment manufacturer. If not, the holding time may be determined as outlined below:

1. Calculate the heat capacity of the feed from the composition via empirical formulas.
2. Calculate the required energy (kg/hour steam) to raise the feed temperature from the preheating temperature to the desired heat treatment temperature.
3. Calculate the excess steam (used for transport) by subtracting the required heating steam flow from the total steam flow.
4. Determine the exact volume of the holding cell.
5. Determine the volumetric flow rates of material into and through the process unit, including any volumetric changes (for example heating steam condensation).
6. Calculate the holding time by dividing the holding cell volume by the volumetric flow rate.

The heating step (ii) must be able to increase the temperature of the supplemented cream fraction to temperatures in excess of 100°C, typically by using an in-direct heat transfer, such as used in plate heat exchangers. Rapid temperature increases may be accomplished by contacting the composition with steam; also described as direct heat transfer. There are different techniques available for contacting the composition with steam. One of these is direct steam injection in which steam is injected into the liquid to be heated. Another technique is steam infusion wherein the liquid is infused into a steam-filled chamber. The temperature of the steam is typically somewhat higher than the desired treatment temperature of the heat treatment, for example at most 10 °C higher than the desired treatment temperate of the heat treatment, typically at most 5 °C higher, or at most 3 °C higher. Other energy sources may also be applied to the heating the composition, such as electromagnetic energy. Examples of useful electromagnetic energy are IR radiation and/or microwave radiation.

Typically, the heated composition is cooled as part of the high temperature treatment. The cooling may comprise or consist of flash cooling or by using an in direct cooling technology, such as plate cooling exchanger. The cooling media can be a combination of regenerated heated water from prior heated product, and/or water at ambient temperature, and/or water at temperatures below 5°C, and/or glycol. The term "flash cooling" is the cooling obtained by introducing, e.g. spraying, a hot liquid or aerosol into a vacuum chamber, whereby part of the liquid evaporates and rapidly cools the remaining liquid. The cooling preferably cools the composition to a temperature of at most 90 °C, such as at most 70 °C, and typically in the range of 5-70 °C. The duration of the "flash cooling" is typically at most 50 msec, and for indirect cooling typically at the most 30 seconds.

Examples of useful high temperature heat treatment systems are e.g. the Saniheat™-system Gea Niro (Denmark), the Linient Steam Injection LSI™-system of Gea Niro (Denmark) or the Instant Infusion System (IIS) of Invensys APV (Denmark). Exemplary systems are found in WO 98/07328 (Niro A/S). General aspects of high temperature treatment are e.g. found in "Thermal technologies in food processing" ISBN 185573558 X.

The purpose of the heat treatment step (ii) is to provide a heat treated cream fraction having a reduced microbial load.

By "microbial load" we mean the total viable count of microorganisms, which may include bacteria, yeasts and moulds. ISO 4833:2003 specifies a horizontal method for the enumeration of microorganisms, by counting the colonies growing in a solid medium after aerobic incubation at 30 °C. In essence, two poured plates are prepared using a specified culture medium and a specified quantity of the test liquid. Other pairs of poured plates are prepared, under the same conditions, using decimal dilutions of the test liquid. The plates are aerobically incubated at 30 °C for 72 hours. The number of microorganisms per millilitre of sample is calculated from the number of colonies obtained on selected plates. Thus, microorganisms may be enumerated according to ISO 4833:2003. Alternatively, the method of ISO 4833:2003 may be altered by altering the duration and/or temperature of aerobic incubation. For example, the aerobic incubation may be performed at between 21 °C and 37 °C, for between 72 hours and five days. At lower temperatures, a longer incubation may be required. For example at 21 °C, the incubation may be performed for five days. Typically, when enumerated according to ISO 4833:2003, the total viable count of microorganisms is less than 5000 cfu/mL, typically less than 1000 cfu/mL, such as less than 500 cfu/mL. Lower viable counts are typically achieved by a more intensive heat treatment i.e. at higher temperature and/or longer duration, and typically allow for a product with a longer shelf-life.

Although step (iv) of the method is optional, it is preferred to perform step (iv). According to step (iv) of the method, microorganisms are physically separated from the aqueous milk fraction to obtain an aqueous milk fraction having a reduced microbial load. The testing of microbial load is as described above in relation to the heat treated cream fraction. The combination of step (iv) and the pasteurisation step (vi) when applied to the aqueous milk fraction typically results in a total viable count of microorganisms of less than 5000 cfu, more typically less than 1000 cfu/mL, such as less than 500 cfu/mL. The separation actually removes microorganisms from the aqueous milk fraction contrary to other sterilisation techniques which only kill the microorganisms and leave the dead microorganisms in the milk. The physical separation may e.g. remove at least 90% of the microorganisms, typically at least 95% of the microorganisms, such as at least 99% of the microorganisms of the aqueous milk fraction. The physical separation may involve bactofugation and/or microfiltration. Suitable bactofuges, including one one-phase or two-phase bactofuges, can be found in Tetra Pak Dairy processing Handbook 2003 (ISBN 91-631-3427-6).

In a preferred embodiment of the method provided herein, the microfiltration is performed using a filter having a pore size in the range of 0.5-1.5 μm, preferably in the range of 0.6-1.4 μm, even more preferably in the range of 0.8-1.4 μm, such as 1.2 μm. These pore size ranges have been found to be advantageous as they retain most of the microorganisms of the aqueous milk fraction with substantially no alteration of the protein composition. The microfilter may be a cross-flow microfilter. A suitable microfiltration system can e.g. be found in Tetra Pak Dairy processing Handbook 2003 (ISBN 91-631-3427-6).

The physical separation is typically performed at above ambient temperature, such as between 45° C and 70 °C, and preferably between 50° C and 65 °C. Microfiltration may alternatively be performed at below ambient temperatures.

If step (iv) of the method is not performed, the aqueous milk fraction may alternatively be subjected to heat treatment in order to reduce its microbial load. Any suitable heat treatment may be applied, such as sterilization, including UHT, as described above in relation to the cream fraction; or pasteurisation as described below.

According to steps (v) and (vi) of the method, the aqueous milk fraction having a reduced microbial load is combined with the heat treated cream fraction; and the aqueous milk fraction is pasteurised before, during or after it is combined with the heat treated cream fraction. Thus, if physical separation is performed, all of the aqueous milk fraction in the final product is treated by physical separation and pasteurisation to reduce the microbial load. The cream fraction may be combined with the aqueous milk fraction and the total volume pasteurised, or the cream fraction may be added to the aqueous milk fraction after the pasteurisation of the aqueous milk fraction. Thus, the cream fraction is either pasteurised, or not pasteurised, in the final product, depending on at what stage it is added to the aqueous milk fraction. By "pasteurisation" we include the meaning of heating a composition such that all of the composition is held at a temperature of at least 63 °C for at least 30 minutes; or at least 72 °C for at least 15 seconds, as specified in Grade "A" Pasteurized Milk Ordinance., U.S. Dept of Health and Human Services, Public Health Service, Food and Drug Administration, 2009. If the fat content of the composition is 10% or greater, or total solids content is 18% or greater, or if the composition contains added sweeteners, the specified temperature shall be increased by 3 °C. Typically, pasteurisation is performed by heating at 63 °C for 30 minutes, or 72 °C for 15 seconds. "Pasteurisation" also includes any other process approved as equivalent by public health authorities, such as the FDA. For example, pasteurisation may be performed by heating at 74 °C for 25 seconds. Other suitable pasteurisation methods are described in H. G. Kessler, Food and Bio Process Engineering - Dairy Technology, fifth edition, pages 177-178. According to Pasteurized Milk Ordinance standards, the total bacterial count of Grade A raw milk for an individual producer should not exceed 100,000 cfu/mL; and following pasteurisation, the total bacterial count should not exceed 20,000 cfu/mL. According to other guidelines, pasteurisation must guarantee a total bacterial count of <30,000 cfu/mL and Enterobacteriaceae or coliform <1 cfu/ml (R. K. Robinson. Modern Dairy Technology. Volume 1. Advances in milk process. Second edition, page 11-12).

Following combination and pasteurisation in steps (v) and (vi), and when measured immediately following processing and filling into bottles, the milk product typically has a total viable count (tvc), measured as colony forming units (cfu)/mL of less than 5000 cfu, more typically less than 500 cfu/mL. The tvc, tested at 30 °C and 21 °C may be as low as <1 cfu/mL, depending on process conditions. The extended shelf-life of this fresh milk product provided herein is due to the reduction in microbial load, which results in at most a low residual level of viable microorganisms, combined with the conventional refrigerated temperatures of storage of fresh, perishable food products.

Typically, in either batch or continuous mode, the relative proportion of the heat treated cream fraction and the aqueous milk fraction having a reduced microbial load in step (v) is selected so as to obtain a supplemented milk product with a selected percentage fat. For example, if a whole milk product is to be made, an appropriate volume of cream is included in order to yield a product containing approximately 3.5% fat. "Standardisation" for milk fat content is described in Pieter Walstra, Jan T. M. Wouters, Tom J. Geurts. Dairy Science and Technology, Second edition, page 222. Suitably, the quantity of the at least one thermostable functional food ingredient in step (i) is selected so as to obtain a supplemented milk product with a selected quantity of at least one thermostable functional food ingredient. This is achieved by first calculating how much cream is required to obtain the desired fat content of the final product (i.e. "standardisation"), and then calculating how much of the at least one thermostable functional food ingredient admixed with a liquid is required per volume of cream. When calculating the required amount, it is important to take into account any overage required to compensate for loss of the thermostable functional food ingredient during the production process; and also to take into account that the cream and aqueous milk fractions may already contain amounts of the functional food ingredient.

Information about the micronutrient content of cows' whole milk is provided in "Fortification Basics: Milk" (supra). The vitamin A content of whole milk ranges from about 600 to 1800 IU/L, and the vitamin D content ranges from about 4 to 40 IU/L. These vitamins are subject to seasonal variations due to differences in feeding patterns of cattle. Vitamin K is present at about 41 $\mu$g/L; iron at about 0.52 mg/L; calcium at about 9.7 mg/L. McCance & Widdowson's Composition of Foods (7th edition) defines the following natural levels of vitamins A, D and iron in cows' whole milk in the UK: vitamin D = trace; vitamin A = 36 $\mu$g per 100 grams; iron = 0.02 mg per 100 grams. The selected amount of micronutrient or functional food ingredient to be included in the final product may vary depending on the target consumer, their needs, and the quantity of the milk product that they are likely to consume per day. Acceptable upper, lower and target levels may be chosen.

Recommended intakes of vitamins and minerals may vary depending on prevailing health guidelines. According to McCance & Widdowson's Composition of Foods (7th edition), the adult recommended intake (RI) per day of iron is 14 mg, and the RI for various vitamins is as follows: vitamin A, 800$\mu$g; niacin (B3), 16mg; pantothenic acid (B5) 6mg; vitamin B6, 1.4mg; vitamin B12, 2.5$\mu$g; vitamin D, 5$\mu$g. A typical milk product provided herein may contain from 5 to 20% and preferably 15% of RI per 100 ml of milk. This equates to 120$\mu$g vitamin A; 2.4mg niacin (B3); 0.9 mg pantothenic acid (B5); 0.21mg vitamin B6; 0.375$\mu$g vitamin B12; 0.75$\mu$g vitamin D; and/or 2.1mg iron. According to "Fortification Basics: Milk" (supra), milk products for general consumption are typically fortified with 5000 IU/L vitamin A and/or 500 IU vitamin D. For a toddler milk, a range of vitamin D of about 500 to 1000 IU/kg may be appropriate, with a target value of about 900 IU/kg; and a range of vitamin A of about 1900 to 3300 IU/kg may be appropriate, with a target value of about 2200 IU/kg. Iron may be included in an amount of from 10 to 18 mg/kg, with a target value of about 12 mg/kg. According to one embodiment, target values are 2170 IU/kg for vitamin A, 860 IU/kg for vitamin D and 12mg/kg for iron.

The accuracy of the dosing of the liquid into the cream is ensured by flow measurement controlling the speed of the dosing pump. The quantity of liquid needed can be verified experimentally by preparing a test batch of the milk product and testing the content of the or each functional food ingredient. In subsequent production batches, more or less thermostable functional food ingredient admixed with a liquid is added depending on the test result from the test batch. Vitamins A, D and E can be quantified in test or production batches as described in Olivier Heudi, Marie-Jose Trisconi, Christoper-John Blake, "Simultaneous quantification of vitamins A, D3 and E in fortified infant formulae by liquid chromatography - mass spectrometry" J. Chromatography A (2004), 1022(1-2): 115-23. Iron may be quantified using ICP-OES (inductively coupled plasma/optical emission spectrometry) as described in Encyclopedia of Analytical Chemistry, Xiandeng Hou, Bradley T. Jones. John Wiley & Sons Ltd. 2000, pp 9468-9485 *(see Example 3)*.

In one embodiment of the method provided herein, in step (v) the heat treated cream fraction is homogenised either (i) in the absence of the aqueous milk fraction having a reduced microbial load; or (ii) together with all or at least a portion of the aqueous milk fraction having a reduced microbial load, to obtain a homogenised product. The homogenisation step disrupts the native milk fat globule structure of the cream, resulting in a decreased diameter of fat globules, which have a density which is much closer to that of the aqueous milk phase. The fat component is therefore stabilised within the milk product, and has a reduced tendency to separate to the surface. It is preferred to include a homogenisation step when one or more fat-soluble vitamins have been included, because the homogenisation step allows these vitamins to become solubilised in the lipid droplets, improving their stability within the product. In homogenisation, a flow of liquid is pumped through a valve assembly under high pressure, causing an increase in flow velocity as the liquid passes through the valve, and during which the milk fat globules are disrupted. A one-stage or a two-stage homogeniser may be used. Milk is typically homogenised at a temperature above the melting point of fats (45 °C), such as at 60 °C. A typical pressure is 5 MPa or greater. A typical pressure for a one stage or first stage homogenisation may be about 15 MPa. If a second stage homogenisation is used, this may be at a reduced pressure, such as 5 MPa. Suitable homogenisers are Tetra Pak Tetra Alex, GEA Niro Soavi or SPX APV Rannie.

The homogenisation step, if included, may be performed before or after the pasteurisation step. Where the product contains added fat-soluble vitamins, it may be advantageous to homogenise before pasteurising, to reduce losses. Typically, at least some of the aqueous milk phase is included with the cream fraction in the homogenisation step. The fat content of the mixture is suitably below 25% during the homogenisation, such as between 10 and 12%. Proteins from the aqueous milk phase typically adsorb onto the surface of the disrupted milk fat globule during or shortly after homogenisation, stabilising the lipid droplets.

Suitably, the cream fraction is not homogenised prior to heat treatment (step (ii) of the method provided herein). Even though in prior art fortification processes, iron is added after homogenisation of milk, or fat soluble vitamins are homogenised with milk, the inventors have found that homogenisation of cream with or after addition of fortificants can be omitted in the method provided herein, thus providing procedural efficiency. In this embodiment, if homogenisation of the cream is performed, it is after step (ii).

The method may involve one or more cooling steps. The heat treated cream fraction obtained in step (ii) may be subjected to cooling prior to step (v) and/or the product of step (vi) may be subjected to cooling. For example, the heat treated cream fraction may be cooled to 35 °C to 70 °C prior to homogenisation, typically to the temperature at which homogenisation is to be performed. Indirect cooling may be performed using tubular or plate pack heat exchangers (Dairy Processing Handbook second revised edition 2003 Tetra Pak Processing systems AB, Chapter 6). The final product is typically cooled to a temperature within the temperature range that the product is intended to be stored at, or at temperature suitable for packaging of the product. The product may be cooled to between 1 at 5 °C for refrigerated storage. Fresh and extended shelf life (ESL) milk is typically stored below 8 °C.

Typically, the components of the product are subjected to as little heat treatment as possible consistent with the required microbial safety level and shelf-life. In practice, then, the aqueous milk fraction is typically subjected to only one pasteurisation step, and other heating steps, such as prior to separation or homogenisation, are conducted at a lower temperature than what would be a conventional temperature for pasteurisation, i.e. lower than 72 °C or lower than 63 °C. Typically, the aqueous milk fraction has not been subjected to heat treatment at a temperature of at least 88 °C. Compliance with this requirement can be determined by a negative result in the peroxidase test, as described in Example 3. Milk which has been heated at 88 °C or above loses peroxidase enzyme activity from its aqueous phase.

The method provided herein may further comprise the step of packaging the supplemented milk product, such as by non-aseptic or aseptic packaging, such as by filling the supplemented milk product into one or more non-aseptic or aseptic containers. Suitable packaging methods are described in Pieter Walstra, Jan T. M. Wouters, Tom J. Geurts. Dairy Science and Technology, Second edition, Chapter 15, page 411. Useful containers may be e.g. bottles, cartons or bags.

Also disclosed herein is a supplemented milk product prepared according to the method provided herein. Typical products are provided packaged ready for consumption.

Also provided herein is a supplemented milk product comprising:

(a) at least one thermostable functional food ingredient comprising one or more minerals or vitamins selected from iron, vitamin A, and vitamin D;
(b) aqueous milk from which microorganisms have been physically separated and which has been subjected to pasteurisation;
(c) cream which has been heat treated at a temperature of at least 100 °C for a time period sufficient to obtain cream having a reduced microbial load;

wherein the iron content is ≥0.7 mg/100mL product, the vitamin A content is ≥40 μg/100mL product, and/or the vitamin D content is ≥0.25 μg/100mL product; and
wherein the aqueous milk has not been subjected to heat treatment at a temperature of at least 88 °C.

The supplemented milk product is typically made according to the method provided herein.

The product contains (a), at least one thermostable functional food ingredient comprising one or more minerals or vitamins selected from iron, vitamin A, and vitamin D. Typically, the product is packaged and the packaging includes a label which identifies the supplementary thermostable functional food ingredients. Typically, the at least one thermostable functional food ingredient comprises one or more minerals or vitamins. If the thermostable functional food ingredient is a normal component of milk, such as a vitamin or mineral, its content will be increased above the normal amount found in milk that has been subjected to the same processing steps. The composition of milk, including its vitamins and minerals, is well known in the art (Fortification Basics: Milk (*supra*)). The options concerning vitamins, minerals and other thermostable functional food ingredients are as described in relation to the method provided herein. In one embodiment, the one or more minerals or vitamins comprises iron, such as iron in a water-soluble form, such as a ferrous compound, such as ferrous bis-glycinate or ferrous lactate. In one embodiment, the one or more minerals or vitamins comprises at least one fat-soluble vitamin, optionally selected from vitamin A and vitamin D. The one or more minerals or vitamins may comprise iron and at least one fat-soluble vitamin, optionally selected from vitamin A and vitamin D.

The product also comprises aqueous milk from which microorganisms have been physically separated and which has been subjected to pasteurisation; and which has not been subjected to heat treatment at a temperature of at least 88 °C. The aqueous milk phase of the product is peroxidase positive, by virtue of not having been heated to a temperature of at least 88 °C. The whole product also has a characteristically low microorganism content. Typically, when enumerated according to ISO 4833:2003, the total viable count of microorganisms is less than 5000 cfu/mL, typically less than 1000 cfu/mL, such as less than 500 cfu/mL. It is believed that the combination of a peroxidase positive test result and such low tvc can only be obtained by a combination of physical separation of microorganisms and pasteurisation. Heat treatment alone would need to be at a higher temperature in order to achieve such a low tvc.

The product also comprises cream which has been heat treated at a temperature of at least 100 °C for a time period sufficient to obtain cream having a reduced microbial load.

As noted above, the product typically has a total viable count of microorganisms of less than 5000 cfu/mL, typically less than 1000 cfu/mL, such as less than 500 cfu/mL. Cream that had not been sufficiently heat treated would contribute a higher microbial burden to the overall product. Cream that has been heated as in step (ii) of the method provided herein is negative for peroxidase, and may be tested for this property as in Example 3.

As a result of applying only moderate heat treatment to the aqueous milk phase, the product made according to the method provided herein, such as the product provided herein, typically has various advantageous sensory characteristics.

Sensory testing may be performed according to ISO 22935-1:2009, ISO 22935-2:2009 and ISO 22935-3:2009, which relate to sensory analysis of milk and milk products. Sensory properties such as visual appearance, consistency, odour and taste are preferably tested. In some embodiments, the milk product tastes, smells and appears substantially the same as a corresponding product made without the addition of a thermostable functional food ingredient. In some embodiments, the milk product tastes, smells and appears substantially the same as a product made by subjecting the same proportion of aqueous milk and cream fractions to conventional pasteurisation and, where the product provided herein is homogenised, also homogenisation, without the addition of the thermostable functional food ingredient. Thus, the product may taste, smell and appear substantially as fresh milk. "Fresh milk" has a limited shelf life of a few days, is chilled at the point of sale, and has typically been subjected to mild heat treatment such as pasteurisation. This is in contrast to milk products in which the aqueous milk phase has been subjected to more extreme heat treatments, which tends to have a cooked taste, and may have off flavours.

The milk product provided herein typically has a relatively low content of denatured beta-lactoglobulin, due to the relatively mild heat treatment of the aqueous milk fraction. Preferably, at most 10% (w/w) of the beta-lactoglobulin of the milk is denatured relative to the total amount of both denatured and non-denatured beta-lactoglobulin. In contrast, in typical extended storage life (ESL) milk heat treated at about 120 °C for 6-8s, more than 30% of beta-lactoglobulin is denatured.

The determination of the degree of denaturation of beta-lactoglobulin of a processed milk product requires a sample of the unprocessed milk derivative and a sample of the processed milk product. Each sample is analysed according to ISO 13875:2005(E) "Liquid milk - Determination of acid-soluble beta-lactoglobulin content" to determine the amount of acid soluble beta-lactoglobulin in the samples - expressed in the unit mg/L sample.

The degree of denaturation (DD) of beta-lactoglobulin of the milk product is calculated via the formula:

$$DD = 100\% \ast (BLGr - BLGh)/BLGr$$

wherein:

DD is the degree of denaturation (DD) of beta-lactoglobulin.
BLGr is the content of beta-lactoglobulin in the untreated milk derivative (mg/L). BLGh is the content of beta-lactoglobulin in the processed milk product to which the degree of denaturation relates (mg/L).

Heat treatment of milk is the cause of Type 1 reactions leading to the denaturation, degradation, and inactivation of whey proteins, enzymes, and vitamins. The Maillard reaction plays a key role in such Type 1 reactions, and is responsible for a caramelised or cooked flavour. This reaction can be monitored by measuring the furosine (epsilon-N-2-furoylmethyl-L-lysine) and lactulose (4-O-beta-galactopyranosyl-D-fructose) levels and the furosine/lactulose ratio in a product. The furosine content of pasteurised milk is generally no greater than 2.0 mg/L milk, while levels in UHT depend on the heating conditions, but levels of about 56 mg/L are reported in normal UHT. The level of furosine in ESL milks are reported to be at level of 11.6 mg/100g protein (reference European Dairy Magazine 2009, No. 7, pp. 18-22. Authors: Mayer, H. K.; Raba, B; Meier, J.: Schmidt, A.) which would equate to 4.0 mg/L milk. The milk product provided herein typically has a lower level of furosine than ESL milks, expected to be <3.0 mg/L.

The lactulose content of normal UHT is reported to be in the range of 34 -42 mg/ml and 0-10 mg/L in ESL milk. There is no trace of lactulose in pasteurized milk. The milk product provided herein typically is expected to have no greater levels than 5 mg/ml. (reference: Food and Bio process engineering, H. G. Kessler, 2002, A. Kessler, European Dairy Magazine 2009, No. 7, pp. 18-22. Authors: Mayer, H. K.; Raba, B; Meier, J.: Schmidt, A.))

Methods for determining furosine and lactulose levels in milk or milk-derived products are known in the art: Both HPLC or enzymatic assays, as well as front-face fluorescence spectroscopy methods are described by Kulmyrzaev et al., 2002 in Lait 82: 725-735. Lactulose content in a milk sample may be measured by an enzymatic assay, defined by the International Organisation for Standards, given publication No: ISO 11285:2004(E); IDF 175: 2004(E). Furosine content may be analysed by HPLC. For example, the milk sample is hydrolysed overnight in HCl solution at 105 °C; and one aliquot of the hydrolyzate is used to determine the total Nitrogen content; and another aliquot is passed through a C18 column to separate out the furosine, which is then determined by HPLC-DAD and quantified with respect to a furosine standard.

The product made according to the method provided herein, such as the product provided herein, typically has an extended shelf-life, due to a high microbial safety level. "Shelf-life" means the time in which the milk product can be stored, hermetically sealed, at a specific temperature before spoilage occurs due to growth of microorganisms. A typical extended shelf-life of the product when stored at less than 8 °C may be a minimum of 10 days, such as a minimum of 15 days, a minimum of 20 days or a minimum of 25 days. A product is considered to be within its shelf-life if the tvc is <100 cfu/mL. Thus, a product may have a tvc <100 cfu/mL for the first 10 days after production, such as for the first 15 days after production, for the first 20 days, or for the first 25 days after production. An exemplary product has a tvc <100 cfu/mL for at least 28 days after production (day of packing).

**Example 1: Production of an enriched milk containing ferrous bis-glycinate and vitamins A and D**

*Premix recipe*

A dry powder blend was obtained from Frutarom Limited, Israel. The particle size is such that 90% passes through a 40 mesh sieve.

**Table 6: Ingredient list**

| Ingredient | Amount per 100g dry powder |
|---|---|
| Ferrous bis-glycinate hydrate | 21.0g (iron content = 3.6g) |
| Retinyl acetate (vitamin A) | 200mg |
| cholecalciferol (vitamin D3) | 7.5mg |

Further ingredients of the dry powder are tripotassium citrate, dextrose, gum arabic, maltodextrin, citric acid, ascorbic acid and vegetable oil.

According to the manufacturer, the vitamins A and D3 powder components were prepared by forming an oil in water emulsion of the vitamins and spray-drying together with maltodextrin. The iron is provided as ferrous bis-glycinate powder and is added at the blending stage.

The premix was prepared from the dry powder blend by mixing the powder with water. The ferrous bis-glycinate is completely soluble in the water, and the vitamins A and D are present in oil droplets of less than 10 $\mu$m. 40g of premix powder was mixed with 60g water to make a solution. This was mixed together and agitated with a silverson for approximately 3 minutes.

*Process steps*

A batch of 35L of long shelf-life fortified milk was prepared according to the following processing steps, with reference to the schematic diagram in Figure 1.

Step 1: Raw milk was collected and stored at 5 °C.

Step 2: Raw milk from step 1 was preheated to 52-58 °C and then subjected to centrifugation using a standard dairy centrifuge to produce a cream fraction having 40% fat and a skim milk fraction having 0.06% fat.

Step 3: The premix was added to the preheated cream by batch mixing in an amount of 1g of diluted premix to 1L of cream.

Step 4: The cream fraction was high heat treated by heating to 124 °C for 4 s using indirect heat treatment, and then cooled to 60 °C. Heating and cooling were performed using a tubular or plate heat exchanger.

Step 5: The skim milk from step 2 was pre-heated to 50 to 58 °C, then cooled (if necessary) to 55 °C and microfiltered by direct flow filtration using a ceramic PAL 1.2 micron filter, with a flow rate of 1000 Uh.

Step 6: The cream fraction from step 4 was combined with the skim milk from step 5 to produce a whole milk with a fat content of 3.5% (w/w) fat.

Step 7: The whole milk from step 6 was homogenised at 60 °C with a two stage homogeniser, the first stage at 150 bar and the second stage at 50 bar.

Step 8: The whole milk from step 7 was pasteurised at 74 °C for 25 s.

Step 9: The whole milk from step 8 was cooled to 2 °C and then packed into sterile 500 mL bottles and stored at 2 °C.

**Example 2: Production of milk without enrichment**

Whole milk was prepared without enrichment according to Example 1, with the exception that step 3 was omitted.

**Example 3: Method of Analysis**

*Analysis A: Sensory testing*

Milk products are tested by a panel of adults, such as parents who have children aged between 1 and 8 years. Respondents are asked to assess products blind and in a randomised order to prevent bias from order effects. Water and water biscuits are provided as palate cleansers.

A questionnaire includes the following questions/topics:

(1) Overall liking (9-point hedonic scale). The tasters had to rate the samples as: dislike extremely (1); dislike very much (2); dislike moderately (3); dislike slightly (4); neither like nor dislike (5); like slightly (6); like moderately (7); like very much (8); like extremely (9).
(2) Tasters were asked to choose from the list below the attributes that would apply to the sample:
Fresh, Creamy, Stale, Mouthcoating, Refreshing, Flat, Thin, Thick, Smooth, Malty, Sweet, Dry, Chemically, Cooked, Metallic, Milky, Powdery, Other. (Also referred to as CATA testing (check all that apply)
(3) Comments were sought (likes and dislikes).

*Analysis 8: Vitamin A testing*

Vitamin A is tested in milk products according to EN 12823-1 2014 (Title: Foodstuffs. Determination of vitamin A by high performance liquid chromatography. Measurement of all-E-retinol and 13-Z-retinol).

Briefly, vitamin A is released from the sample by alkaline hydrolysis using ethanolic potassium hydroxide solution and extracted three times with hexane:ethylacetate (85:15 v/v). The determination is carried out by normal phase High-Performance Liquid Chromatography with UV/Diode-Array Detection (325 nm). For quantification a 3-point calibration curve is used. The calibration standards used are pure compounds, purity > 98 %. The purity of the standards is for each calibration determined by spectrophotometric measurement (325 nm).

*Analysis C: Vitamin D testing*

Vitamin D is tested in liquid milk products according to EN 12821 :2009 (Title: Foodstuffs. Determination of vitamin D by high performance liquid chromatography. Measurement of cholecalciferol (D3) or ergocalciferol (D2))
Briefly, vitamin D3 is saponified in the sample using alcoholic potassium hydroxide solution and extracted with hexane:ethylacetate. The extract is concentrated and cleaned up by solid phase extraction, followed by normal phase semi-preparative. The amount of vitamin D3 is determined by reverse phase High-Performance Liquid Chromatography with Diode-Array Detection (265 nm) and mass spectrometry detection. For quantification a 3-point calibration curve is used. The calibration standards used are U.S. Pharmacopeial Reference standards. The purity of the standards is for each calibration determined by spectrophotometric measurement (UV 265 nm).

*Analysis D: Iron testing*

Milk samples are tested for Fe content using ICP-OES (inductively coupled plasma/optical emission spectrometry) as described in Encyclopedia of Analytical Chemistry, Xiandeng Hou, Bradley T. Jones. John Wiley & Sons Ltd. 2000, pp 9468-9485.
Briefly, samples are dried and ashed, then dissolved in 5M hydrochloric acid and diluted to known volumes. Acid digests of samples are analysed by ICP-OES. All metals in an aspirated solution are atomised and electronically excited in the plasma. On return to a lower electronic state, electromagnetic radiation with wavelengths characteristic of particular elements is emitted. The radiation is dispersed by an echelle grating and detected by a Charge Injection Device (CID). The intensity of emission at the chosen wavelength is directly proportional to the number of atoms of the element present, which in turn is proportional to the concentration in solution. Interferences are minimized by using wavelengths which, are as far as possible, are not subject to spectral overlap. For further information see: Inductively Coupled Plasma - Atomic Emission Spectroscopy, An Atlas of Spectral Information. R K Winge *et al.*

*Analysis E: Detection of the enzyme lacto-peroxidase*

Detection of the enzyme peroxidase in milk is used as an indication that the upper temperature for pasteurisation has not been exceeded. A suitable method is described in Pieter Walstra, Jan T. Wouters, Tom J. Geurts. Dairy Science and Technology, Second edition, page 86.

MATERIALS AND EQUIPMENT

1. Reagents

Solution 1

Dissolve 1 g of 1.4 - phenylenediamine ($C_6H_8N_2$) in 50 ml warm deionised water (either on a stirrer for 4 hours or in a refrigerator overnight). Keep solution in a foil-covered bottle in a refrigerator. Discard solution after 2 days or earlier if a sediment forms.

Solution 2

Dilute 9 ml of 30% hydrogen peroxide in deionised water and make up to 100 ml. Add 0.1 ml concentrated sulphuric acid per 100 ml to stabilise solution. This solution is stable for 1 month if kept in a refrigerator in a dark glass bottle with a glass stopper.

PROCEDURES

1. Method

1.1 Boil 10 ml sample for 30 minutes as a control.
1.2 Pipette 5 ml of sample into a clean test tube.
1.3 Pipette 5 ml of control into a clean test tube.
1.4 Add 5 ml solution 1 to each tube.
1.5 Add two drops solution 2 to each tube.

2. Interpretation of results

2.1 A blue/black colour developed within 30 seconds indicates peroxidase is present. Record the result as Pass.
2.2 A blue/black colour developed after more than 30 seconds indicates a non-specific reaction.
2.3 No colour development in the sample indicates that the peroxidase enzyme has been destroyed by over-pasteurisation. Record the result as Fail.
2.4 The control should also remain pale.

**Example 4: Analysis of the stability of the milk products of Examples 1 and 2 with respect to fortificants over shelf-life.**

The milk products of Example 1 (the product provided herein) and Example 2 (without fortificants) were analysed for content of vitamins A, D and iron. Samples were assayed from the top and the bottom of individual bottles of milk the day after production, and at 7, 14 and 28 days after production. Bottles were stored at 4 °C before assay.

*Vitamin A*

The amount of retinyl acetate added in the premix per 100 g of final product was 80 $\mu$g per 100g. Given the target level of 65.0 $\mu$g/100g in the final product, an overage of 23% was applied. Minimum and maximum tolerance levels were set at 58.5 and 97.5 $\mu$g/100g. The maximum tolerance level is 50% greater than the target level, in accordance with draft guidance (June 2012) from the European Commission Health and Consumers Directorate (ECHCD) for setting of tolerances for nutrient values declared on a label. The minimum tolerance level is in accordance with test accuracy of $\pm$10%.
The results of testing as in Example 3 are shown in Table 7 below. As can be seen, product testing from the top or bottom of the bottle at each of the days after production showed that the product contains an amount of vitamin A falling within the desired range set by the minimum and maximum tolerance values at all time points. The vitamin A therefore remains stable in the milk throughout its shelf-life. Some apparent variation in vitamin A content between the top and bottom of the bottles may be accounted for by sampling error, as only one bottle was assayed per time point. The evidence supports an overall uniformity in the composition of the product.

**Table 7: Vitamin A content of product**

| Vitamin A amount ($\mu$g/100g) | | | | | | |
|---|---|---|---|---|---|---|
| Test day | Test results from product | | | Desired test results | | |
| | top | bottom | % Difference between top & bottom | Minimum Tolerance | Target Level | Maximum Tolerance |
| 1 | 83.0 | 84.4 | 1.66 | 58.5 | 65.0 | 97.5 |
| 7 | 90.0 | 85.2 | -5.63 | 58.5 | 65.0 | 97.5 |
| 14 | 87.8 | 82.6 | -6.30 | 58.5 | 65.0 | 97.5 |
| 21 | 94.7 | 92.3 | -2.60 | 58.5 | 65.0 | 97.5 |
| 28 | 94.4 | 85.7 | -10.15 | 58.5 | 65.0 | 97.5 |

*Vitamin D*

The amount of cholecalciferol added in the premix per 100g of final product was 3.0$\mu$g per 100g. Given the target level of 2.15$\mu$g/100g in the final product, an overage of 39.5% was applied. Minimum and maximum tolerance levels were set at 1.48 and 2.55$\mu$g/100g. These tolerances were chosen in view of ECHCD Guidance and test accuracy, as for vitamin A.

The results of testing as in Example 3 are shown in Table 8 below. As can be seen, product testing from the top or bottom of the bottle at each of the days after production showed that the product contains an amount of vitamin D falling within the desired range set by the minimum and maximum tolerance values at all time points. The vitamin A therefore remains stable in the milk throughout its shelf-life. Some apparent variation in vitamin A content between the top and bottom of the bottles may be accounted for by sampling error, as only one bottle was assayed per time point. The evidence supports an overall uniformity in the composition of the product.

**Table 8: Vitamin D content of product**

| Vitamin D amount ($\mu$g/100g) | | | | | | |
|---|---|---|---|---|---|---|
| Test day | Test results from product | | | Desired test results | | |
| | top | bottom | % Difference between top & bottom | Minimum Tolerance | Target Level | Maximum Tolerance |
| 1 | 2.17 | 2.17 | 0.00 | 1.48 | 1.70 | 2.55 |
| 7 | 2.16 | 2.07 | -4.35 | 1.48 | 1.70 | 2.55 |
| 14 | 2.39 | 2.12 | -12.74 | 1.48 | 1.70 | 2.55 |
| 21 | 1.78 | 1.79 | 0.56 | 1.48 | 1.70 | 2.55 |
| 28 | 2.23 | 2.11 | -5.69 | 1.48 | 1.70 | 2.55 |

*Iron*

The amount of ferrous bis-glycinate added in the premix per 100g of final product equated to 1.44mg iron. Given the target level of 1.20mg iron per 100g in the final product, an overage of 20% was applied. Minimum and maximum tolerance levels were set at 1.02 and 1.80 mg/100g. The maximum tolerance level is 45% greater than the target level, in accordance with draft guidance from the ECHCD *(supra)*. The minimum tolerance level is in accordance with test accuracy of ±15%.

The results of testing as in Example 3 are shown in Table 9 below. As can be seen, product testing from the top or bottom of the bottle at each of the days after production showed that the product contains an amount of iron falling within the desired range set by the minimum and maximum tolerance values at all time points. The iron therefore remains stable in the milk throughout its shelf-life. Some apparent variation in iron content between the top and bottom of the bottles may be accounted for by sampling error, as only one bottle was assayed per time point. The evidence supports an overall uniformity in the composition of the product.

**Table 9: Iron content of product**

| Iron amount (mg/100g) | | | | | | |
|---|---|---|---|---|---|---|
| Test day | Test results from product | | | Desired test results | | |
| | top | bottom | % Difference between top & bottom | Minimum Tolerance | Target Level | Maximum Tolerance |
| 1 | 1.10 | 1.14 | 3.51 | 1.02 | 1.20 | 1.80 |
| 7 | 1.24 | 1.32 | 6.06 | 1.02 | 1.20 | 1.80 |
| 14 | 1.32 | 1.61 | 18.01 | 1.02 | 1.20 | 1.80 |
| 21 | 1.35 | 1.35 | 0.00 | 1.02 | 1.20 | 1.80 |
| 28 | 1.32 | 1.30 | -1.54 | 1.02 | 1.20 | 1.80 |

In comparison, a non-enriched reference product made as in Example 2 was typically found to contain iron at an amount of <1 mg/kg of product, in testing of top and bottom product fractions. Although the reference product itself was not tested for vitamins, it can be expected to contain vitamin A at 36 $\mu$g per 100g and a trace of vitamin D, as described in McCance & Widdowson's Composition of Foods (7th edition) in relation to UK pasteurised milk.

**Example 5: Alternative milk product enriched with ferrous lactate dihydrate and vitamins A and D**

*Premix recipe*

A dry powder blend was obtained from Lycored, Aylesford, UK. The particle size is such that 100% passes through a 0.915mm sieve. The blend consists of the following ingredients: ferrous Lactate Dihydrate; Vitamin D3 100 CWS CapsuDar (SD); Maltodextrin DE19; Vitamin A Acetate 325 cws/a.

According to the manufacturer, the fat soluble vitamin forms are made using the following method; -

Mix water phase and oil phase
Homogenise
Spray dry
Pack

If then being used in a premix - the above and any additional ingredients are added to a big conical blender, mixed and then analysed and packed.

The premix was prepared from the dry powder blend by mixing the powder with water.

The ferrous Lactate dehydrate is soluble in the water, and the vitamins A and D are present in oil droplets of less than 10 $\mu$m.

Using the supplier's recommendation for dosage levels - 15mg per 100ml is required.

*Process steps*

A batch of 35L of long shelf-life fortified milk was prepared according to the same process steps as in Example 1, with the exception that the above diluted premix was added in step 3 rather than the premix described in Example 1.

*Results of vitamin and iron testing*

The results of testing are shown in Table 10 below. Samples were tested from the top or bottom of the bottle at each of the days after production, for vitamins A and D and iron. Maximum and minimum tolerances and target levels are as in Example 4. Vitamin A and iron levels were close to or above the maximum tolerance levels at all time points, indicating that in future tests, lower quantities of vitamin A or iron should be added in production. Vitamin D levels were between the target level and the maximum tolerance level at all time points. The results show that the vitamins and the iron remains stable in the milk throughout its shelf-life. Some apparent variation in vitamin or iron content between the top and bottom of the bottles may be accounted for by sampling error, as only one bottle was assayed per time point. The evidence supports an overall uniformity in the composition of the product.

**Table 10: Vitamin and iron content of product**

| Vitamin A amount ($\mu$g/100g) | | | |
|---|---|---|---|
| Test day | Test results from product | | |
| | top | bottom | % Difference between top & bottom |
| 1 | 96.3 | 91.6 | -5.13 |
| 7 | 97.5 | 83.9 | -16.21 |
| 14 | 105 | 99.5 | -5.53 |
| 21 | 99 | 91.6 | -8.08 |
| 28 | 91.22 | 99.5 | 8.34 |
| Vitamin D amount ($\mu$g/100g) | | | |
| Test day | Test results from product | | |
| | top | bottom | % Difference between top & bottom |
| 1 | 2.65 | 2.67 | 0.75 |
| 7 | 2.94 | 2.85 | -3.16 |

(continued)

| Vitamin D amount (μg/100g) | | | |
|---|---|---|---|
| Test day | Test results from product | | |
| | top | bottom | % Difference between top & bottom |
| 14 | 2.87 | 2.56 | -12.11 |
| 21 | 2.75 | 2.96 | 7.09 |
| 28 | 2.4 | 2.85 | 15.79 |
| Iron amount (mg/100g) | | | |
| Test day | Test results from product | | |
| | top | bottom | % Difference between top & bottom |
| 1 | 2.16 | 2.2 | 1.82 |
| 7 | 1.87 | 1.85 | -1.08 |
| 14 | 1.62 | 1.84 | 11.96 |
| 21 | 1.59 | 1.62 | 1.85 |
| 28 | 1.8 | 1.74 | -3.45 |

**Example 6: Comparative analysis of sensory properties of products made as in Examples 1, 2 and 5**

A reference product and two sample products were tested using Analysis A: Sensory testing as in Example 3. The panel of testers were 314 parents having children aged between 1 and 8 years. The reference product was made as in Example 2. Sample 904 is a fortified milk sample made as in Example 1. Sample 901 is a fortified milk sample made as in Example 5.

*Summary results*

In terms of overall liking, sample 904 did not score significantly differently from the reference. However, it was more often described as thick than the reference. Sample 901 scored significantly lower than the reference and sample 904 in terms of overall liking. Sample 901 was described less often as milky, fresh, smooth and refreshing, and more often as mouthcoating, chemical, malty and powdery. However, there were three different groups of consumers: the highest proportion of consumers (57%) scored sample 904 just a bit lower than the reference and sample 901, but a smaller group of people (27%) scored sample 901 much lower than the 2 other samples whereas another group (16%) scored the reference much lower than the 2 other samples.

*Preference analysis*

Sample 901 scored significantly differently to the others according to ANOVA (*P-value<0.0001%);* indeed, sample 901 scored lower than the reference and sample 904 according to Tukey's test (95% confidence). The reference and sample 904 did not score significantly differently in Tukey's test.

The reference and sample 904 scored in average between "like slightly" and "like moderately" whereas sample 901 scored around "like slightly". The mean score values on the 9-point hedonic scale were: 6.65 for the reference; 5.97 for 901; and 6.40 for 904.

Three different groups of consumers were identified using Agglomerative Hierarchical Clustering - Euclidian distance, Ward method:

(1) 27% of consumers (group 1) scored the reference the highest and scored sample 901 significantly lower than the two other products by ANOVA and Tukey's test (95% confidence).
(2) 57% of consumers (group 2) did not score the reference and sample 901 differently but scored sample 904 a bit lower (ANOVA and Tukey's test).
(3) 16% of consumers (group 3) scored the reference lower than the 2 samples (ANOVA and Tukey's test).

*CATA anlavsis*

Sample 901 was described less often as milky, fresh, smooth and refreshing, and more often as mouthcoating, chemical, malty and powdery (Cochran's Q Test ($\alpha$=5%)).

The reference was described less often as thick and stale and more often as thin (Cochran's Q Test ($\alpha$=5%).

*Comments*

No obvious differences could be seen in the comments (likes or dislikes) between the samples.

**Example 7: Commercial premix recipe**

A further spray-dried dry powder blend was obtained from Frutarom Limited, Israel.

**Table 11: Ingredient list**

| Ingredient | Amount per 100g dry powder |
|---|---|
| Ferrous bis-glycinate hydrate | 21.0g (iron content = 3.6g) |
| Retinyl palmitate (vitamin A) | 200 mg |
| cholecalciferol (vitamin D3) | 7.5 mg |

Further ingredients of the dry powder are tripotassium citrate (for pH adjustment), dextrose (carrier), gum arabic (carrier), maltodextrin (carrier), citric acid (conditioner for iron compound), ascorbic acid (conditioner for iron compound), canola oil (carrier for fat-soluble vitamins), tocopherol (antioxidant) and a proprietor antioxidant. A proprietary antioxidant is included in order to ensure a shelf life of 1 year for the premix, but it does not impact on the milk fortification process or characteristics of the milk product.

The vitamins A and D3 powder components were prepared by forming an oil in water emulsion of the vitamins and spray-drying together with maltodextrin. The iron is provided as ferrous bis-glycinate powder and is added at the blending stage.

This premix provides 3.6g or iron, 7.5 mg vitamin D and 200 mg vitamin A per 100 g of powder. To prepare an aqueous admixture at trial scale, 40 g of powder is added to 60 g of water while agitating. Agitation is maintained for a following three minutes.

Sufficient aqueous admixture is added to the cream fraction such that the aqueous admixture provides 1 g to every 1 L of the final product. The amounts of the fortificants per 100 mL of milk product are 1.2 mg iron, 2.15 $\mu$g vitamin D and 65 $\mu$g vitamin A.

At commercial scale, 6 kg of powder premix may be admixed with 120 L water. The greater dilution compared to test scale allows a more accurate dosing because a greater volume is added to the cream stream. The aqueous admixture is typically added at 0.04% w/v. This is sufficient to make a 15,000 L batch of enriched milk.

Testing of fortified products over shelf life for vitamins A and D and iron (as in Example 4) is underway.

**Example 8: Alternative milk product enriched with oily forms of vitamins A and D**

*A & D recipe*

An A&D oily blend was obtained from Fortitech, Denmark, which consists of retinyl palmitate, vitamin D3 and sunflower oil.

The oily blend is ready for use - so no mixing is required. Fortitech recommended 88mg of oily blend per 100ml of finished product and so this is the dosage recommendation followed for the trial.

*Process steps*

A batch of 35L of long shelf-life fortified milk was prepared according to the method in Example 1, with the exception that in step 3 the oily blend was added to the preheated cream by batch mixing based on the dosage recommendation of the supplier.

*Results*

The product was tested and found to contain 798μg vitamin A and 1.68μg vitamin D per 100ml, meeting the target levels for both vitamins.

**Example 9: Further commercial premix recipe**

A further commercial dry powder premix composition was obtained from Frutarom Limited, Israel, having the following composition:

**Table 12: Ingredient List**

| Ingredient | Amount per 100g dry powder |
|---|---|
| Tripotassium citrate (for pH adjustment) | 48.0g |
| Dextrose (carrier) | 17g |
| Ferrous bis-glycinate hydrate | 24.8g |
| Gum Arabic (carrier) | 3g |
| Maltodextrin (carrier) | 3g |
| Citric acid (conditioner for iron compound) | 300mg |
| Ascorbic acid (conditioner for iron compound) | 1.6g |
| Canola oil (carrier for fat-soluble vitamins) | 1.5g |
| Vitamin E (antioxidant) | 20mg |
| Origanox™ (Proprietary antioxidant) | 270mg |
| Retinyl palmitate (vitamin A) | 500mg |
| cholecalciferol (vitamin D3) | 10mg |

This premix may be used essentially as in Example 7.

**Claims**

1. A method for producing a supplemented milk product, the method comprising the steps of:

   (i) providing a cream fraction and adding at least one thermostable functional food ingredient admixed with a liquid to the cream fraction to obtain a supplemented cream fraction, wherein the at least one thermostable functional food ingredient comprises one or more minerals or vitamins selected from iron, vitamin A, and vitamin D;
   (ii) heat treating the supplemented cream fraction at a temperature of at least 100 °C for a time period sufficient to obtain a heat treated cream fraction having a reduced microbial load;
   (iii) providing an aqueous milk fraction;
   (iv) optionally physically separating microorganisms from the aqueous milk fraction to obtain an aqueous milk fraction having a reduced microbial load;
   (v) combining the aqueous milk fraction having a reduced microbial load with the heat treated cream fraction; and
   (vi) pasteurising the aqueous milk fraction before, during or after it is combined with the heat treated cream fraction;

   wherein the iron content of the product is ≥0.7 mg/100mL product, the vitamin A content of the product is ≥40 μg/100mL product, and/or the vitamin D content of the product is ≥0.25 μg/100mL product.

2. The method of Claim 1 wherein the method comprises physically separating microorganisms from the aqueous milk fraction to obtain an aqueous milk fraction having a reduced microbial load, according to step (iv).

3. The method of any preceding claim wherein the at least one thermostable functional food ingredient admixed with a liquid is provided by:

(i) providing the at least one thermostable functional food ingredient as one or more dry powders and admixing the one or more dry powders with an aqueous liquid such that each of the at least one thermostable functional food ingredients forms a solution, a suspension or an emulsion with the aqueous liquid; or
(ii) providing the at least one thermostable functional food ingredient as one or more dry powders and admixing the one or more dry powders with an oily liquid such that each of the at least one thermostable functional food ingredients forms a solution, a suspension or an emulsion with the oily liquid.

4. The method of any preceding claim implemented as a continuous process.

5. The method of any preceding claim wherein the relative proportion of the heat treated cream fraction and the aqueous milk fraction having a reduced microbial load in step (v) is selected so as to obtain a supplemented milk product with a selected percentage fat, optionally wherein the quantity of the at least one thermostable functional food ingredient in step (i) is selected so as to obtain supplemented milk product with a selected quantity of at least one thermostable functional food ingredient.

6. The method of any preceding claim wherein step (iv) comprises microfiltration of the aqueous milk fraction, optional by passing the aqueous milk fraction through a microfilter having a pore size of between 0.5 and 1.5 $\mu$m.

7. The method of any preceding claim wherein in step (v) the heat treated cream fraction is homogenised either (i) in the absence of the aqueous milk fraction having a reduced microbial load; or (ii) together with all or at least a portion of the aqueous milk fraction having a reduced microbial load, to obtain a homogenised product.

8. The method of any preceding claim wherein cream fraction is not homogenised prior to step (ii).

9. The method of any preceding claim wherein the heat treated cream fraction obtained in step (ii) is subjected to cooling prior to step (v) and/or the product of step (vi) is subjected to cooling.

10. The method of any preceding claim wherein the aqueous milk fraction has not been subjected to heat treatment at a temperature of at least 88 °C.

11. The method of any preceding claim further comprising packaging the supplemented milk product, such as by non-aseptic or aseptic packaging, such as by filling the supplemented milk product or supplemented dairy product into one or more non-aseptic or aseptic containers.

12. A supplemented milk product comprising:

(a) at least one supplementary thermostable functional food ingredient comprising one or more minerals or vitamins selected from iron, vitamin A, and vitamin D;
(b) aqueous milk from which microorganisms have been physically separated and which has been subjected to pasteurisation;
(c) cream which has been heat treated at a temperature of at least 100 °C for a time period sufficient to obtain cream having a reduced microbial load;

wherein the iron content is $\geq$0.7 mg/100mL product, the vitamin A content is $\geq$40 $\mu$g/100mL product, and/or the vitamin D content is $\geq$0.25 $\mu$g/100mL product; and
wherein the aqueous milk has not been subjected to heat treatment at a temperature of at least 88 °C.

**Patentansprüche**

1. Verfahren zum Herstellen eines ergänzten Milchprodukts, wobei das Verfahren die folgenden Schritte umfasst:

(i) Bereitstellen einer Rahmfraktion und Zugeben mindestens eines thermostabilen funktionellen Nahrungsmittelbestandteils, der mit einer Flüssigkeit vermischt ist, zu der Rahmfraktion, um eine ergänzte Rahmfraktion zu erhalten, wobei der mindestens eine thermostabile funktionelle Nahrungsmittelbestandteil ein oder mehrere Mineralien oder Vitamine umfasst, die aus Eisen, Vitamin A und Vitamin D ausgewählt sind;

(ii) Wärmebehandlung der ergänzten Rahmfraktion bei einer Temperatur von mindestens 100 °C für einen Zeitraum, der ausreicht, um eine wärmebehandelte Rahmfraktion mit einer reduzierten mikrobiellen Belastung zu erhalten;

(iii) Bereitstellen einer wässrigen Milchfraktion;

(iv) gegebenenfalls physikalisches Abtrennen von Mikroorganismen aus der wässrigen Milchfraktion, um eine wässrige Milchfraktion mit einer reduzierten mikrobiellen Belastung zu erhalten;

(v) Kombinieren der wässrigen Milchfraktion mit reduzierter mikrobieller Belastung mit der wärmebehandelten Rahmfraktion; und

(vi) Pasteurisieren der wässrigen Milchfraktion, bevor, während oder nachdem sie mit der wärmebehandelten Rahmfraktion kombiniert wird;

wobei der Eisengehalt des Produkts ≥0,7 mg/100 mL Produkt, der Vitamin-A-Gehalt des Produkts ≥40 μg/100 mL Produkt und/oder der Vitamin-D-Gehalt des Produkts ≥0,25 ug/100 mL Produkt beträgt.

2. Verfahren nach Anspruch 1, wobei das Verfahren das physikalische Abtrennen von Mikroorganismen aus der wässrigen Milchfraktion umfasst, um eine wässrige Milchfraktion mit einer reduzierten mikrobiellen Belastung zu erhalten, gemäß Schritt (iv).

3. Verfahren nach einem der vorstehenden Ansprüche, wobei der mindestens eine thermostabile funktionelle Nahrungsmittelbestandteil, der mit einer Flüssigkeit vermischt ist, bereitgestellt wird durch:

(i) Bereitstellen des mindestens einen thermostabilen funktionellen Nahrungsmittelbestandteils als ein oder mehrere trockene Pulver und Mischen des einen oder der mehreren trockenen Pulver mit einer wässrigen Flüssigkeit, so dass jeder der mindestens einen thermostabilen funktionellen Nahrungsmittelbestandteile eine Lösung, eine Suspension oder eine Emulsion mit der wässrigen Flüssigkeit bildet; oder

(ii) Bereitstellen des mindestens einen thermostabilen funktionellen Nahrungsmittelbestandteils als ein oder mehrere trockene Pulver und Mischen des einen oder der mehreren trockenen Pulver mit einer öligen Flüssigkeit, so dass jeder der mindestens einen thermostabilen funktionellen Nahrungsmittelbestandteile eine Lösung, eine Suspension oder eine Emulsion mit der öligen Flüssigkeit bildet.

4. Verfahren nach einem der vorstehenden Ansprüche, durchgeführt als ein kontinuierlicher Prozess.

5. Verfahren nach einem der vorstehenden Ansprüche, wobei das relative Verhältnis der wärmebehandelten Rahmfraktion und der wässrigen Milchfraktion mit reduzierter mikrobieller Belastung in Schritt (v) so gewählt wird, dass ein ergänztes Milchprodukt mit einem ausgewählten prozentualen Fettanteil erhalten wird, wobei optional die Menge des mindestens einen thermostabilen funktionellen Nahrungsmittelbestandteils in Schritt (i) so gewählt wird, dass ein ergänztes Milchprodukt mit einer ausgewählten Menge von mindestens einem thermostabilen funktionellen Nahrungsmittelbestandteil erhalten wird.

6. Verfahren nach einem der vorstehenden Ansprüche, wobei Schritt (iv) die Mikrofiltration der wässrigen Milchfraktion umfasst, optional durch Leiten der wässrigen Milchfraktion durch einen Mikrofilter mit einer Porengröße zwischen 0,5 und 1,5 μm.

7. Verfahren nach einem der vorstehenden Ansprüche, wobei in Schritt (v) die wärmebehandelte Rahmfraktion entweder (i) in Abwesenheit der wässrigen Milchfraktion mit einer reduzierten mikrobiellen Belastung; oder (ii) zusammen mit der gesamten oder zumindest einem Teil der wässrigen Milchfraktion mit einer reduzierten mikrobiellen Belastung homogenisiert wird, um ein homogenisiertes Produkt zu erhalten.

8. Verfahren nach einem der vorstehenden Ansprüche, wobei die Rahmfraktion vor dem Schritt (ii) nicht homogenisiert wird.

9. Verfahren nach einem der vorstehenden Ansprüche, wobei die in Schritt (ii) erhaltene wärmebehandelte Rahmfraktion vor Schritt (v) einer Kühlung unterzogen wird und/oder das Produkt aus Schritt (vi) einer Kühlung unterzogen wird.

10. Verfahren nach einem der vorstehenden Ansprüche, wobei die wässrige Milchfraktion keiner Wärmebehandlung bei einer Temperatur von mindestens 88 °C unterzogen wurde.

**11.** Verfahren nach einem der vorstehenden Ansprüche, ferner umfassend das Verpacken des ergänzten Milchprodukts, z. B. durch nichtaseptisches oder aseptisches Verpacken, z. B. durch Abfüllen des ergänzten Milchprodukts oder des ergänzten Milcherzeugnisses in einen oder mehrere nichtaseptische oder aseptische Behälter.

**12.** Ergänztes Milchprodukt, umfassend:

(a) mindestens einen ergänzenden thermostabilen funktionellen Nahrungsmittelbestandteil, umfassend ein oder mehrere Mineralien oder Vitamine, ausgewählt aus Eisen, Vitamin A und Vitamin D;

(b) wässrige Milch, aus der Mikroorganismen physikalisch abgetrennt wurden und die einer Pasteurisierung unterzogen wurde;

(c) Rahm, der bei einer Temperatur von mindestens 100 °C über einen Zeitraum wärmebehandelt wurde, der ausreicht, um Rahm mit einer reduzierten mikrobiellen Belastung zu erhalten;

wobei der Eisengehalt ≥0,7 mg/100 mL Produkt, der Vitamin-A-Gehalt ≥40 ug/100 mL Produkt und/oder der Vitamin-D-Gehalt ≥0,25 ug/100 mL Produkt beträgt; und

wobei die wässrige Milch keiner Wärmebehandlung bei einer Temperatur von mindestens 88 °C unterzogen wurde.

## Revendications

**1.** Procédé de production d'un produit de lait supplémenté, le procédé comprenant les étapes suivantes :

(i) la fourniture d'une fraction de crème et l'ajout d'au moins un ingrédient alimentaire fonctionnel thermostable mélangé à un liquide à la fraction de crème pour obtenir une fraction de crème supplémentée, dans lequel l'au moins un ingrédient alimentaire fonctionnel thermostable comprend un ou plusieurs minéraux ou vitamines sélectionnés parmi le fer, la vitamine A et la vitamine D ;

(ii) le traitement thermique de la fraction de crème supplémentée à une température d'au moins 100 °C pendant une période de temps suffisante pour obtenir une fraction de crème traitée thermiquement ayant une charge microbienne réduite ;

(iii) la fourniture d'une fraction aqueuse de lait ;

(iv) éventuellement la séparation physique de micro-organismes de la fraction aqueuse de lait pour obtenir une fraction aqueuse de lait ayant une charge microbienne réduite ;

(v) la combinaison de la fraction aqueuse de lait ayant une charge microbienne réduite avec la fraction de crème traitée thermiquement ; et

(vi) la pasteurisation de la fraction aqueuse de lait avant, pendant ou après sa combinaison avec la fraction de crème traitée thermiquement ;

dans lequel la teneur en fer du produit est ≥0,7 mg/100 mL de produit, la teneur en vitamine A du produit est ≥40 pg/100 mL de produit et/ou la teneur en vitamine D du produit est ≥0,25 pg/100 mL de produit.

**2.** Procédé selon la revendication 1, dans lequel le procédé comprend la séparation physique de micro-organismes de la fraction aqueuse de lait pour obtenir une fraction aqueuse de lait ayant une charge microbienne réduite, selon l'étape (iv).

**3.** Procédé selon une quelconque revendication précédente, dans lequel l'au moins un ingrédient alimentaire fonctionnel thermostable mélangé à un liquide est fourni par :

(i) la fourniture de l'au moins un ingrédient alimentaire fonctionnel thermostable sous la forme d'une ou de plusieurs poudres sèches et le mélange des une ou plusieurs poudres sèches avec un liquide aqueux de telle sorte que chacun des au moins un ingrédients alimentaires fonctionnels thermostables forme une solution, une suspension ou une émulsion avec le liquide aqueux ; ou

(ii) la fourniture de l'au moins un ingrédient alimentaire fonctionnel thermostable sous la forme d'une ou de plusieurs poudres sèches et le mélange des une ou plusieurs poudres sèches avec un liquide huileux de telle sorte que chacun des au moins un ingrédients alimentaires fonctionnels thermostables forme une solution, une suspension ou une émulsion avec le liquide huileux.

**4.** Procédé selon une quelconque revendication précédente, mis en œuvre comme un processus continu.

**5.** Procédé selon une quelconque revendication précédente, dans lequel la proportion relative de la fraction de crème traitée thermiquement et de la fraction aqueuse de lait ayant une charge microbienne réduite à l'étape (v) est sélectionnée de manière à obtenir un produit de lait supplémenté avec un pourcentage de matières grasses sélectionné, éventuellement dans lequel la quantité de l'au moins un ingrédient alimentaire fonctionnel thermostable dans l'étape (i) est sélectionnée de manière à obtenir un produit de lait supplémenté avec une quantité sélectionnée d'au moins un ingrédient alimentaire fonctionnel thermostable.

6. Procédé selon une quelconque revendication précédente, dans lequel l'étape (iv) comprend la microfiltration de la fraction aqueuse de lait, éventuellement en faisant passer la fraction aqueuse de lait à travers un microfiltre ayant une taille de pores comprise entre 0,5 et 1,5 $\mu$m.

7. Procédé selon une quelconque revendication précédente, dans lequel à l'étape (v), la fraction de crème traitée thermiquement est homogénéisée soit (i) en l'absence de la fraction aqueuse de lait ayant une charge microbienne réduite ; ou (ii) avec toute ou au moins une partie de la fraction aqueuse de lait ayant une charge microbienne réduite, pour obtenir un produit homogénéisé.

8. Procédé selon une quelconque revendication précédente, dans lequel la fraction de crème n'est pas homogénéisée avant l'étape (ii).

9. Procédé selon une quelconque revendication précédente, dans lequel la fraction de crème traitée thermiquement obtenue à l'étape (ii) est soumise à un refroidissement avant l'étape (v) et/ou le produit de l'étape (vi) est soumis à un refroidissement.

10. Procédé selon une quelconque revendication précédente, dans lequel la fraction aqueuse de lait n'a pas été soumise à un traitement thermique à une température d'au moins 88 °C.

11. Procédé selon une quelconque revendication précédente, comprenant en outre le conditionnement du produit de lait supplémenté, par exemple par un emballage non aseptique ou aseptique, par exemple en remplissant le produit de lait supplémenté ou le produit de lait supplémenté dans un ou plusieurs récipients non aseptiques ou aseptiques.

12. Produit de lait supplémenté comprenant :

(a) au moins un ingrédient alimentaire fonctionnel thermostable supplémentaire comprenant un ou plusieurs minéraux ou vitamines sélectionnés parmi le fer, la vitamine A et la vitamine D ;
(b) du lait aqueux dont les micro-organismes ont été physiquement séparés et qui a été soumis à une pasteurisation ;
(c) une crème qui a été traitée thermiquement à une température d'au moins 100 °C pendant une période de temps suffisante pour obtenir une crème ayant une charge microbienne réduite ;

dans lequel la teneur en fer est ≥0,7 mg/100 mL de produit, la teneur en vitamine A est ≥40 pg/100 mL de produit et/ou la teneur en vitamine D est ≥0,25 pg/100 mL de produit ; et
dans lequel le lait aqueux n'a pas été soumis à un traitement thermique à une température d'au moins 88 °C.

## Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5935632 A
- US 6372276 B1
- US 20020028278 A
- WO 2010085957 A2
- WO 9636238 A1
- US 5480661 A
- WO 9631130 A
- WO 03026445 A
- WO 9807328 A

### Non-patent literature cited in the description

- The Technology of Vitamins in Food. Chapman & Hall, 1993
- **PIETER WALSTRA ; JAN T. M. WOUTERS ; TOM J. GUERTS.** Dairy Science and Technology. 242-245
- **H. G. KESSLER.** Food and Bio Process Engineering - Dairy Technology. 145
- **OLIVARES et al.** *J. Nutr.,* 1997, vol. 127 (7), 1407-11
- Modern Dairy Technology. **R. K. ROBINSON.** Advances in milk processing. vol. 1, 63
- **PIETER WALSTRA ; JAN T. M. WOUTERS ; TOM J. GEURTS.** Dairy Science and Technology. 279-296
- **LEE et al.** *Biosci. Biotechnol. Biochem.,* 2004, vol. 68, 495-500
- **KING.** *Journal of Dairy Science,* 1962, vol. 45, 1165-1171
- Vitamin A factsheet for health professionals. National Institutes of Health, 2013
- **BENDICH ; OLSON.** *FASEB J,* 1989, vol. 3, 1927-1932
- **SEID MAHDI JAFARI.** Encapsulation of nano-emulsions by spray drying: Optimization of the process. LAP Lambert Academic Publishing, 2009
- **H. G. KESSLER.** Food and Bio Process Engineering - Dairy Technology. 553-557
- Guidelines for Vitamin A and D Fortification of Fluid Milk. *The Dairy Practices Council, Publication DPC 53,* July 2001
- *Thermal technologies in food processing,* ISBN 185573558 X
- Tetra Pak Dairy processing Handbook. 2003
- **H. G. KESSLER.** Food and Bio Process Engineering - Dairy Technology. 177-178
- Modern Dairy Technology. **R. K. ROBINSON.** Advances in milk process. vol. 1, 11-12
- **PIETER WALSTRA ; JAN T. M. WOUTERS ; TOM J. GEURTS.** Dairy Science and Technology. 222
- McCance & Widdowson's Composition of Foods
- **OLIVIER HEUDI ; MARIE-JOSE TRISCONI ; CHRISTOPER-JOHN BLAKE.** Simultaneous quantification of vitamins A, D3 and E in fortified infant formulae by liquid chromatography - mass spectrometry. *J. Chromatography A,* 2004, vol. 1022 (1-2), 115-23
- **XIANDENG HOU ; BRADLEY T. JONES.** Encyclopedia of Analytical Chemistry. John Wiley & Sons Ltd, 2000, 9468-9485
- Tetra Pak Processing systems AB. Dairy Processing Handbook. 2003
- **PIETER WALSTRA ; JAN T. M. WOUTERS ; TOM J. GEURTS.** Dairy Science and Technology. 411
- **MAYER, H. K. ; RABA, B ; MEIER, J. ; SCHMIDT, A.** *European Dairy Magazine,* 2009, vol. 7, 18-22
- **H. G. KESSLER ; A. KESSLER ; MAYER, H. K. ; RABA, B ; MEIER, J. ; SCHMIDT, A.** *European Dairy Magazine,* 2002, (7), 18-22
- **KULMYRZAEV et al.** *Lait,* 2002, vol. 82, 725-735
- **R K WINGE.** Inductively Coupled Plasma - Atomic Emission Spectroscopy. *An Atlas of Spectral Information*
- **PIETER WALSTRA ; JAN T. WOUTERS ; TOM J. GEURTS.** Dairy Science and Technology. 86